(19) Europäisches Patentamt / European Patent Office / Office européen des brevets

(11) EP 3 296 700 B1

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(51) Int Cl.:
***G01D 5/244*** *(2006.01)*

(21) Anmeldenummer: **17167135.7**

(22) Anmeldetag: **19.04.2017**

(54) **VERFAHREN ZUR BESTIMMUNG DER POSITION EINES POSITIONSGEBERS EINES POSITIONSMESSSYSTEMS**

METHOD FOR DETERMINING THE POSITION OF A POSITION SENSOR OF A POSITION MEASUREMENT SYSTEM

PROCÉDÉ DE DÉTERMINATION DE LA POSITION D'UN CAPTEUR DE POSITION D'UN SYSTÈME DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2016 CH 12072016**

(43) Veröffentlichungstag der Anmeldung:
**21.03.2018 Patentblatt 2018/12**

(73) Patentinhaber:
- **NM Numercial Modelling GmbH**
  **6300 Zug (CH)**
- **maglab GmbH**
  **4053 Basel (CH)**

(72) Erfinder: **ROOS, Markus**
**6300 Zug (CH)**

(74) Vertreter: **Falk, Urs**
**Patentanwaltsbüro Dr. Urs Falk**
**Eichholzweg 9A**
**6312 Steinhausen (CH)**

(56) Entgegenhaltungen:
**WO-A2-02/065247**
**US-A1- 2011 067 479**
**US-A1- 2015 048 242**

EP 3 296 700 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft Verfahren zur Bestimmung der Position eines Positionsgebers eines Positionsmesssystems, insbesondere ein Verfahren zur Bestimmung der Position des Positionsgebers eines linearen Wegmesssystems oder des Positionsgebers eines Winkelmesssystems.

Es sind verschiedene Sensorsysteme zur Messung der Position $\phi$ eines rotierenden oder sich linear bewegenden Positionsgebers bekannt, bei denen die zu gewinnende Information durch sinus- und cosinusförmig variierende Rohmesssigale $p_1 = cos(\phi)$ und $p_2 = sin(\phi)$ repräsentiert ist. Mögliche Realisierungen beinhalten z.B. die Messung von Komponenten des Induktionsfeldes eines Permanentmagneten an geeigneten Orten im Raum. Die gesuchte Position wird dann z.B. via $\phi$ = atan2($p_2$,$p_1$) mit der aus der C-Programmiersprache bekannten Funktion atan2 aus $p_1$,$p_2$ bestimmt. Diese Voraussetzungen schränken mögliche Anordnungen von Sensorelementen und Positionsgeber stark ein und erfordern insbesondere eine hohe Genauigkeit bei deren Herstellung, resp. der relativen Positionierung von Sensorchip und Positionsgeber.

Eine grundlegende Schwierigkeit bei diesen Verfahren liegt darin, dass eine nicht-ideale Anordnung von Positionsgeber und Sensorchip zu Verzerrungen der Rohmesssignale führt, insbesondere, dass diese nicht mehr die reine Sinus- und Cosinusform aufweisen und damit zu einer ungenauen Bestimmung der Position $\phi$ führen. Es existieren Verfahren, um die Rohsignalqualität zu verbessern, z.B. indem Offset- und Amplitudenkorrekturen angewendet werden. Ein aus WO 2005124286 bekanntes Verfahren für eine Sensoranordnung mit zwei Sensoren beruht auf einer Beschreibung der Messpunkte als Ellipsen und bedarf spezifischer Kalibrierungsmessungen, welche Parameter für die Korrekturen liefern und in der Praxis nur mit beträchtlichem Aufwand realisierbar sind. Dieses Verfahren erfordert eine grosse Sorgfalt beim Design der Sensoranordnung und vor allem bei der Justierung des Permanentmagneten, damit die Messwerte ausreichend genau auf einer Ellipse liegen. Wenn die tatsächliche Rotationsachse nicht durch das magnetisch definierte Zentrum des Permanentmagneten verläuft, kann die Korrektur sogar den gegenteiligen Effekt einer Vergrösserung des Winkelfehlers bewirken.

Ein weiteres Verfahren für die Kalibrierung von Positionsgeber ist aus US2015/048242 bekannt. In vielen Fällen reagiert ein Positionsmesssystem auf Fremdfelder (z.B. das Erdmagnetfeld im Falle eines Positionsmessers auf der Basis von Permanentmagneten). Ohne Gegenmassnahmen sind diese zusätzlichen Feldkomponenten nicht vom Nutzfeld zu unterscheiden, so dass die Fremdfelder die Genauigkeit des Positionsmesssystems beschränken.

Eine grundlegende Herausforderung für Positionsmesssysteme ist weiter deren Langzeitstabilität, d.h., eine anfänglich ausreichend genaue Kalibrierung verändert sich im Laufe der Zeit z.B. durch mechanische Verschiebung der Bauteile relativ zueinander oder durch Driften elektronischer Sensoreigenschaften. Die Messqualität von Systemen im laufenden Betrieb ist nach dem Stand der Technik aber nicht feststellbar, insbesondere kann das nicht intrinsisch, d.h. ohne Referenzmessung von aussen geschehen. Eine intrinsische Methode wäre aber für fehlertolerante Systeme von grosser Bedeutung. Damit zusammenhängend wäre weiter eine Rekalibration eines Positionsmesssystems im laufenden Betrieb sehr wertvoll, um die Langzeitstabilität entscheidend zu verbessern.

Das erfindungsgemässe Verfahren zur Bestimmung der Position eines Positionsgebers beruht auf der Erkenntnis, dass die von den Sensoren gelieferten Sensormesswerte als Messvektor, d.h. als Punkt in einem Vektorraum darstellbar sind, dessen Dimension der Anzahl der Sensoren entspricht, und dass die bei der Bewegung des Positionsgebers (Drehung um eine Drehachse oder Verschiebung entlang einer Achse) erzeugten Messvektoren auf einer Orbit genannten Bahnkurve in diesem Vektorraum liegen. Dieser Orbit kann - bei idealen Gegebenheiten - mittels einer linearen Abbildung auf einen Kreis oder einen Kreisbogen projiziert werden. D.h. jeder Position des Positionsgebers entspricht ein Punkt auf dem Orbit im abstrakten Raum der Signalvektoren, welcher eindeutig einem Punkt auf dem Kreis bzw. Kreisbogen zugeordnet ist. Nicht-ideale Gegebenheiten, beispielsweise nicht-ideale Eigenschaften des Positionsgebers, was insbesondere bei Magneten der Fall sein kann, oder eine zu geringe Anzahl von Sensoren oder die Verwendung von nicht optimal ausgewählten Kalibrierpositionen, verursachen Abweichungen von der Kreisform. Die lineare Abbildung ist als Matrix-Vektor-Operation darstellbar und kann mit Standardmethoden der linearen Algebra ermittelt werden. Jeder Messvektor wird auf einen 2er-Vektor projiziert, dessen Spitze näherungsweise auf einem Kreis bzw. Kreisbogen liegt, wobei die Richtung des 2er-Vektors der Position des Positionsgebers entspricht. Die Ermittlung der linearen Abbildung erfolgt in einer Kalibrierphase, die die Erfassung von Messvektoren und die Zerlegung einer durch die Messvektoren gebildeten Matrix in zwei oder typischerweise drei Matrizen beinhaltet. Die Darstellung der von den Sensoren gelieferten Messwerte als Vektor ermöglicht es zudem, mit einer weiteren linearen Abbildung den Einfluss von Fremdfeldern, insbesondere magnetischen Fremdfeldern, zu vermindern.

Das erfindungsgemässe Verfahren ist universell einsetzbar. Die Anordnung der Sensoren ist nahezu beliebig. Die Sensoren dürfen sogar verschiedene Komponenten des vom Positionsgeber erzeugten Feldes erfassen. Die Bestimmung der Matrix kann mithilfe von Messungen erfolgen, welche nur ein absolutes Minimum an Voraussetzungen erfüllen müssen. Das Verfahren kommt insbesondere ohne eine Vielzahl von Winkelreferenzmessungen aus, mit Ausnahme der Festlegung der Nulllage, welche jedoch nur eine einzige Referenzmessung erfordert. Diese minimalen Anforderungen an die für die Kalibrierung erforderlichen Messungen erlauben es unter anderem, dass eine Rekalibrierung des Positionsmesssystems im laufenden Betrieb möglich ist, oder dass mit einem Bootstrappingverfahren eine fabrikseitige, initiale Kalibrierung für ein vorgegebenes Positionsmesssystem iterativ verbessert werden kann.

Weiter können in Realisierungen, welche redundante Information zur Position des Positionsgebers liefern (z.B. weil mehr als die minimale Zahl von Einzelsensoren verbaut sind), eine oder mehrere der folgenden Zusatzaufgaben gelöst werden:

- Fehlerdetektion, d.h. intrinsisches Feststellen einer Drift und Auslösen einer vorbestimmten Aktion, zum Beispiel einer entsprechenden Warnung oder einer Rekalibrierung.
- Fremdfeldkompensation durch Ausblenden von Fremdfeldeinflüssen auf die Messsignale.
- Eliminierung von Fehlern, die durch einen Versatz zwischen der tatsächlichen Drehachse des Positionsgebers und der idealen Drehachse entstehen.
- Eliminierung von Fehlern, die durch Unregelmässigkeiten des Magneten entstehen, wenn der Positionsgeber ein Magnet ist.
- Verbesserung des Signal-Rausch-Abstandes, wenn mehr als zwei Sensoren verwendet werden, da dann eine Mehrzahl von Einzelsensorwerten in die Bestimmung der Position eingeht und so eine Mittelung stattfindet. Insbesondere können so Schwierigkeiten beim Nulldurchgang des Sinus-oder Cosinussignals herkömmlicher Systeme vermieden werden.

Des weiteren kann das Verfahren zur Bestimmung der Position eines Positionsgebers erfindungsgemäss so ausgestaltet sein, dass eine Anzahl von r = 2 + b Sensoren benutzt wird, und dass mit einer Projektionsmatrix der Einfluss einer Anzahl von b verschiedenen Fremdfeldkonfigurationen aus den Signalvektoren heraus projiziert wird, wobei die Projektionsmatrix gleichzeitig 2er-Vektoren erzeugt, deren Spitzen im wesentlichen auf einem Kreis oder Kreisbogen liegen.

Die Erfindung besteht in den in den Ansprüchen 1 und 11 angegebenen Merkmalen. Vorteilhafte Ausgestaltungen ergeben sich aus den abhängigen Ansprüchen.

Die Erfindung wird nachfolgend anhand von Ausführungsbeispielen und anhand der Zeichnung näher erläutert. Die Figuren sind schematisch und nicht massstäblich gezeichnet.

| | |
|---|---|
| Fig. 1 | zeigt ein Winkelmesssystem, |
| Fig. 2 | zeigt ein lineares Wegmesssystem, |
| Fig. 3 | zeigt einen Resolver, und |
| Fig. 4 bis 10 | illustrieren verschiedene Aspekte des erfindungsgemässen Verfahrens. |

Die Fig. 1 zeigt ein Positionsmesssystem, das einen um eine vorbestimmte Drehachse 1 drehbaren Magneten 2 und einen Sensorchip 3 aufweist. Die Drehstellung des Magneten 2 ist die mittels des Sensorchips 3 zu bestimmende Position $\phi$. Der Sensorchip 3 ist auf der rechten Seite der Fig. 1 vergrössert wiedergegeben. Der Sensorchip 3 umfasst eine vorbestimmte Anzahl von 1 bis *r* Sensoren 4 und elektronische Schaltkreise für den Betrieb der Sensoren, etc. Die Sensoren 4 sind beispielsweise Hallsensoren. Ein solcher Sensor 4 kann auch ein Cluster von mehreren Einzelsensoren sein, die ein gemeinsames Ausgangssignal liefern. Der Sensorchip 3 kann auch Magnetfeldkonzentratoren enthalten, die das vom Magneten 2 erzeugte Magnetfeld an den Orten der Sensoren 4 verstärken. Die Anzahl *r* der Sensoren 4 beträgt mindestens $r = 2$. Die Sensoren 4 geben je ein Sensorsignal ab. Die Sensorsignale sind hier als $a_1$ bis $a_r$ bezeichnet. Der Index *j* des Sensorsignals $a_j$ bezeichnet also die Nummer des jeweiligen Sensors 4.

Die Fig. 2 zeigt ein Positionsmesssystem, das aus einem Magneten 2 und einem Sensorchip 3 gebildet ist, die relativ zueinander entlang einer linearen Achse *x* verschiebbar sind. Der Sensorchip 3 umfasst eine vorbestimmt Anzahl von 1 bis *r* Sensoren 4 und elektronische Schaltkreise für den Betrieb der Sensoren, etc. Die Sensoren sind z.B. Hallsensoren. Der Magnet 2 besteht aus abwechslungsweise entgegengesetzt magnetisierten Bereichen, welche an den Orten der Sensoren 4 bei einer Verschiebung entlang der Achse x ein sich periodisch änderndes Magnetfeld erzeugen. Die *x*-Lage des Magneten 2 ist die mittels des Sensorchips 3 zu bestimmende Position $\phi$. Dabei ist $x = D/2\pi \cdot \phi$, wobei *D* eine durch den Magneten 2 vorgegebene Distanz ist.

Die Sensoren 4 dieser Positionsmesssysteme liefern, als Folge des sich periodisch ändernden Magnetfelds, harmonische Ausgangssignale. Das Positionsmesssystem der Fig. 1 ist ein Winkelmesssystem mit dem drehbaren Magneten 2 als Positionsgeber. Das Positionsmesssystem der Fig. 2 ist ein lineares Messsystem mit dem verschiebbaren Magneten 2 als Positionsgeber. Der Wertebereich der Position $\phi$ erstreckt sich bei beiden Positionsmesssystemen über einen Bereich von 0 bis $2\pi$, der entweder dem Winkelbereich von 0 bis 360° oder einem linearen Bereich von 0 bis $D$ entspricht, wobei die Strecke $D$ sich dadurch ergibt, dass für alle $j$ = 1, ..., $r$ Sensorsignale $a_j$ gilt $a_j(x + D) = a_j(x)$.

Die Fig. 3 zeigt ein Positionsmesssystem, das aus einer Rotorspule $R$ und aus den Statorspulen $S_i$, $i$ = 1, ..., $r$ mit $r \geq 2$ gebildet ist. Die Rotorspule $R$ ist um eine Drehachse drehbar und wird mit einem sinusförmigen Strom gespeist, der ein Magnetfeld erzeugt. Das Magnetfeld induziert in den Statorspulen $S_i$, $i$ = 1, ..., $r$ eine Spannung, deren Amplitude in Funktion des Drehwinkels $\phi$ der Rotorspule $R$ moduliert wird. Mittels Demodulation werden aus den Statorspulensignalen mit dem Drehwinkel $\phi$ harmonisch variierende Sensorsignale $a_i(t)$, $i$ = 1, ..., $r$ erzeugt, aus denen die momentane Drehwinkelposition $\phi(t)$ der Rotorspule R berechnet werden kann. Der Signalvektor $a_i(t)$ besteht aus der Umhüllenden des Signals der Statorspule $S_i$ für alle $i$ = 1, ..., $r$.

Positionsmesssysteme können auch auf dem induktiven Prinzip beruhen, bei dem wenigstens eine Sende- und wenigstens eine Empfangsspule räumlich fixiert und der Positionsgeber eine um eine Achse drehbare, geometrisch strukturierte, elektrisch leitende Scheibe ist. Es kann auch dieselbe Spule für den Sende- und den Empfangsvorgang verwendet werden. Die Spulen können auf mehreren Ebenen angeordnet und/oder miteinander verbunden werden. Das Positionsmesssystem kann zwei und mehr Spulen aufweisen. Die Verwendung von mehreren Spulen ist insbesondere hilfreich um die volle 360° Drehung zu detektieren. Der Positionsgeber ändert die Induktivität der Sende- und der Empfangsspule(n). Die Sendespulen werden mit Wechselströmen, vorzugsweise sinusförmigen Strömen gespeist, wobei die dadurch erzeugten Magnetfelder in den Empfangsspulen Spannungen induzieren, die wegen den in der Scheibe erzeugten, positionsabhängigen Wirbelströmen harmonisch variierende Amplituden aufweisen. Durch Demodulation gewinnt man die Signale für das erfindungsgemässe Verfahren zur Bestimmung der Position des Positionsgebers.

Das erfindungsgemässe Verfahren ist auch verwendbar bei optischen Positionsmesssystemen, bei denen zwei oder mehrere optische Sensoren (z.B. Phototransistoren, Photodioden, etc.) in Abhängigkeit von der Position eines optisch aktiven Positionsgebers Helligkeits-, Polarisations-, Phasenverschiebungs-, Laufzeit- ("time of flight") oder andere optische Eigenschaftsvariationen detektieren. Dazu reflektiert oder moduliert der Positionsgeber einen Lichtstrahl und verursacht so die von dem Verfahren genutzten harmonischen Signale. Anstelle des optischen Feldes kann ein solcher Positionsmesser weiter auch mit Radar- oder Terrahertzstrahlungssensoren, resp. entsprechenden Positionsgebern realisiert werden. Zudem können anstelle von optischen und elektromagnetischen Wellen auch Schallwellen, insbesondere Ultraschall, genutzt und ein entsprechendes Positionsmesssystem aufgebaut werden.

Das erfindungsgemässe Verfahren ist auch verwendbar in elektrostatischen Positionsmesssystemen, bei denen eine drehbar gelagerte, geometrisch strukturierte Elektrode als Positionsgeber zusammen mit Statorelektroden zwei oder mehr Kondensatoren mit positionsabhängigen Kapazitäten bildet. Dabei werden harmonisch mit der Position variierende kapazitive Signale erzeugt und erfasst. In einem elektrostatischen System kann der Positionsgeber auch durch durch ein strukturiertes dielektrisches Material realisiert werden, welches die Kapazität von zwei oder mehreren räumlich fixierten Elektrodenpaaren harmonisch mit der Position moduliert.

Das erfindungsgemässe Verfahren ermöglicht es zudem, das Nutzsignal oder die Nutzsignale von Störsignalen zu trennen. Als Beispiel sei hier ein magnetischer Drehgeber auf einem Elektromotor genannt. Hierbei kann das Magnetfeld des magnetischen Winkelsensors sauber von den Drehfeldern des Elektromotors getrennt werden. Somit kann die Position störungsfrei bestimmt werden. Dasselbe trifft auch für optische, elektro-magnetische, elektrische, magnetische, und akustische Positionsbestimmungen zu.

Alle diese physikalischen Prinzipien können sowohl für den Aufbau eines Positionsmesssystems mit einem drehbar gelagerten Positionsgeber als auch mit einem verschiebbar gelagerten Positionsgeber verwendet werden.

Die Erfindung betrifft ein Verfahren, mit dem aus den von den Sensoren 4 gelieferten Messwerten die Position $\phi$ berechnet werden kann, ohne dass die Lage des Sensorchips 3 in Bezug auf die Drehachse 1 bzw. auf die lineare Achse $x$ eine Rolle spielt. Das Verfahren kann ein einfaches Verfahren, d.h. ein Verfahren ohne Offsetkorrektur und ohne Fremdfeldkorrektur, oder ein Verfahren mit Offsetkorrektur oder ein Verfahren mit Fremdfeldkorrektur oder ein Verfahren mit Offset- und Fremdfeldkorrektur sein. Das Verfahren umfasst in allen Fällen eine Kalibrierphase und den Normalbetrieb.

Die Offsetkorrektur erfolgt mittels eines Offsetvektors $\vec{a}_0$. Die Fremdfeldkorrektur erfolgt mittels einer Projektionsmatrix $P$. Die Offset- und Fremdfeldkorrektur erfolgt mittels des Offsetvektors $\vec{a}_0$ und der Projektionsmatrix $P$.

Der Offsetvektor $\vec{a}_0$ und die Projektionsmatrix $P$ werden, sofern sie benötigt werden, in der Kalibrierungsphase ermittelt. In der Kalibrierungsphase wird in jedem Fall eine Matrix $M$ ermittelt.

Normalbetrieb

Im Normalbetrieb wird die Position $\phi$ des Positionsgebers berechnet mit den Schritten:

A) Erfassen der Sensorsignale $a_1$ bis $a_r$ der Sensoren.
Die Sensorsignale $a_1$ bis $a_r$ bilden ein r-Tupel ($a_1$, ..., $\alpha_r$), welches als Vektor $\vec{a} = (a_1, ..., a_r)$ in einem *r*-dimensionalen Signalvektorraum interpretiert wird.

B) Bilden eines Messvektors $\vec{q}$ gemäss einer vorbestimmten linearen Funktion zu $\vec{q} = g(\vec{a})$.

C) Berechnen eines Vektors $\vec{p} = M \cdot \vec{q}$.
$\vec{p} = (p_1, p_2)$ ist ein 2er-Vektor mit den Komponenten $p_1$ und $p_2$ und *M* eine 2 x *n* Matrix. $\vec{p} = M \cdot \vec{q}$ kann geschrieben

$$\begin{pmatrix} p_1 \\ p_2 \end{pmatrix} = \begin{pmatrix} M_{11} & \dots & M_{1n} \\ M_{21} & \dots & M_{2n} \end{pmatrix} \cdot \begin{pmatrix} q_1 \\ \vdots \\ q_n \end{pmatrix},$$

werden als

D) Bestimmen der Position $\phi$ aus den Komponenten $p_1$ und $p_2$ des Vektors $\vec{p}$ mittels einer vorbestimmten Funktion $f(\vec{p})$ zu $\phi = f(\vec{p}) = f(p_1, p_2)$.

Bevorzugte Beispiele für die lineare Funktion $g(\vec{a})$ sind:

1) $g(\vec{a}) = \vec{a}$, d.h. $\vec{q} = \vec{a}$, wenn weder eine Offsetkorrektur noch eine Fremdfeldkorrektur durchgeführt wird,

2) $g(\vec{a}) = \vec{a} - \vec{a}_0$, d.h. $\vec{q} = \vec{a} - \vec{a}_0$, wenn (nur) eine Offsetkorrektur durchgeführt wird,

3) $g(\vec{a}) = P \cdot \vec{a}$, d.h. $\vec{q} = P \cdot \vec{a}$, wenn (nur) eine Fremdfeldkorrektur durchgeführt wird, oder

4) $g(\vec{a}) = P \cdot (\vec{a} - \vec{a}_0)$, d.h. $\vec{q} = P \cdot (\vec{a} - \vec{a}_0)$, wenn eine Offset- und Fremdfeldkorrektur durchgeführt wird.

Dabei bezeichnen $\vec{a}_0$ einen Offsetvektor und *P* eine Projektionsmatrix. Die Messvektoren $\vec{q}$ haben somit eine Anzahl von *n* Komponenten, mit $2 \leq n \leq r$.

Die Fig. 4 illustriert den Zusammenhang von Positionen $\phi_k$ des Positionsgebers und den Vektoren $\vec{a}_k$, welche aus den Signalen der *r* Sensoren gebildet werden, für *k* = 1, 2, 3 und *m*. Die Positionen $\phi_k$, die im Bereich von 0 bis $2\pi$ liegen, sind hier als Winkel dargestellt, wie es bei einem Winkelmesssystem der Fall ist. Die Positionen $\phi_k$ des Positionsgebers können aber auch auf einer linearen Achse liegen. Die Pfeile illustrieren die Positionen $\phi_k$ des Positionsgebers, jeder Position $\phi_k$ ist ein Signalvektor $\vec{a}_k$ zugeordnet.

Die Fig. 5 illustriert am Beispiel *n* = 3 die lineare Abbildung $\vec{p} = M \cdot \vec{q}$, die die Messvektoren $\vec{q}$, die auf einem Orbit 5 in einem *n*-dimensionalen Vektorraum liegen, mittels der Matrix *M* auf 2er-Vektoren $\vec{p}$ abbildet, deren Spitzen auf einem Kreis 6 liegen. Die linke Seite illustriert den Raum der Messvektoren $\vec{q}$, die rechte Seite zeigt die Ebene mit dem Kreis 6 und den 2er Vektoren $\vec{p}$. Exemplarisch ist die Abbildung von $\vec{q}_3$ auf $\vec{p}_3$ mit einem Pfeil angedeutet. Jedem Messvektor $\vec{q}_k$ ist ein Vektor $\vec{p}_k$ zugeordnet, dessen Richtung mit einer Referenzrichtung einen Winkel einschliesst, der der Position $\phi_k$ des Positionsgebers entspricht.

## Temperaturkompensation

Die Sensorsignale können temperaturabhängig sein. Die Temperaturabhängigkeit kann auf verschiedene Arten kompensiert werden, beispielsweise indem die Temperatur gemessen wird und die Sensorsignale wie auch die Sensoroffsets temperaturkompensiert werden. Alternativ kann das vorstehende Verfahren bei verschiedenen Temperaturen durchgeführt werden und die massgeblichen Grössen, insbesondere die Matrix *M*, eine temperaturabhängige Matrix sein. Die Matrix *M* wird in diesem Fall beispielsweise für eine vorbestimmte Anzahl von Temperaturstützstellen bestimmt und die Temperaturkompensation folgendermassen realisiert:

1. Messen der Temperatur und Interpolieren der Matrix *M* für die gemessene Temperatur aus den Matrizen *M* an den Stützstellen.

2. Anwendung der interpolierten Matrix *M* auf die aktuellen Messvektoren.

Wird eine Offsetkompensation und/oder eine Fremdfeldkompensation durchgeführt, werden auch der Offsetvektor $\vec{a}_0$ und gegebenenfalls die Projektionsmatrix *P* in derselben Weise durch Interpolation der entsprechenden Objekte an den Temperaturstützstellen bestimmt.

Diese Variante bietet den Vorteil, dass auf diese Weise sowohl Temperatureffekte, welche die mechanische Lage des Positionsgebers relativ zum Sensorchip beeinflussen, als auch temperaturabhängige Effekte in den Sensoren kompensiert werden können.

Der Vektor $\vec{p}$ enthält die vollständige Information über die zu bestimmende Position $\phi$. Der Zusammenhang zwischen dem Vektor $\vec{p}$ und der Position $\phi$ ist bei vielen Anwendungen durch die Gleichungen $p_1 = cos(\phi)$ und $p_2 = sin(\phi)$ gegeben. Die vorbestimmte Funktion $f(\vec{p}) = f(p_1,p_2)$ ist eine Funktion, die auf den Gleichungen $p_1 = cos(\phi)$ und $p_2 = sin(\phi)$ basiert. Sie ist insbesondere eine Funktion, die die Position $\phi$ auf der Basis der Gleichung $\phi$ = arcustangens($p_2/p_1$) und den Vorzeichen der Werte $p_1$ und $p_2$ bestimmt. Die Funktion $f(\vec{p})$ ist beispielsweise die Funktion $f(\vec{p})$ = atan2($p_2$,$p_1$), wobei atan2($p_2$,$p_1$) eine aus vielen Programmiersprachen bekannte Funktion ist, die den korrekten Winkel im Bereich von 0 bis $2\pi$ liefert.

Kalibrierungsphase

Da der Offsetvektor sowohl die Bestimmung der Projektionsmatrix *P* als auch die Bestimmung der Matrix *M* und die Projektionsmatrix die Bestimmung der Matrix *M* beeinflusst, ist in der Kalibrierungsphase folgende Reihenfolge einzuhalten:

1. Bestimmung des Offsetvektors $\vec{a}_0$, sofern eine Offsetkorrektur vorgesehen ist,

2. Bestimmung der Projektionsmatrix *P*, sofern eine Fremdfeldkorrektur vorgesehen ist,

3. Bestimmung der Matrix *M.*

Diese Schritte werden nachfolgend im Detail erläutert.

Bestimmung des Offsetvektors

Der Offsetvektor $\vec{a}_0$ kann auf eine herkömmliche, bekannte Art ermittelt werden. Dazu wird der Offset eines jeden Sensors $a_{0j}$ mit $j$ = 1 bis $r$ ermittelt und die Gesamtheit der Offsets als Offsetvektor $\vec{a}_0 = (a_{01}, ..., a_{0r})$ gespeichert.

Der Offsetvektor $\vec{a}_0$ kann auch aus den Signalvektoren ermittelt werden, wenn die zu den Signalvektoren gehörenden Positionen gleichverteilt sind. Dies erfolgt durch:

1. Bilden der Mittelwerte $\vec{a}_1$ bis $\vec{a}_r$ der Einzelsensorsignale gemäss $\bar{a}_l = \frac{1}{m}\sum_{k=1}^{m} a_{kl}$.

2. Bilden des Offsetvektors $\vec{a}_0 = (\vec{a}_1, ..., \vec{a}_r)$.

Bestimmung der Projektionsmatrix P

Die Signalvektoren $\vec{a} = (a_1, ..., a_r)$, welche den Orbit bilden, liegen im Allgemeinen in einem Unterraum des gesamten $r$-dimensionalen Vektorraums der $r$-Tupel. Einflüsse von Fremdfeldern können in diesem Fall durch Anwendung einer Projektionsmatrix eliminiert werden. Die Bestimmung der Projektionsmatrix *P* erfolgt, vorzugsweise bei Abwesenheit des Positionsgebers, mit den nachfolgenden Schritten. Sie kann aber auch bei Anwesenheit des Positionsgebers durchgeführt werden.

1. Bei Abwesenheit des Positionsgebers umfasst der Schritt 1 die Teilschritte 1.1 bis 1.2, welche für eine vorbestimmte Anzahl von verschiedenen Fremdfeldern $v$ = 1 bis $b \geq 1$ durchgeführt werden, wobei die Zahl b die Bedingung $b \leq r - 2$ erfüllt.

1.1 Anlegen des Fremdfeldes.
Das Fremdfeld ist beispielsweise ein homogenes Magnetfeld, das in eine beliebige Raumrichtung zeigt. Das Fremdfeld kann auch ein inhomogenes Fremdfeld sein, dem das Positionsmesssystem ausgesetzt ist. Um den Einfluss von Fremdfeldern zu eliminieren, sind also zusätzliche Sensoren 4 nötig. Die Mindestanzahl an Sensoren 4, die nötig ist, um eine Anzahl von b verschiedenen Fremdfeldern zu eliminieren, beträgt gemäss der obigen Gleichung $r = b + 2$.

1.2 Erfassen der Sensorsignale $a_1$ bis $a_r$ und Bilden eines Fremdfeldvektors $\vec{f}_v = \vec{a} = (a_1, ..., a_r)$ bzw. gegebenenfalls eines Offset kompensierten Fremdfeldvektors $\vec{f}_v = \vec{a} - \vec{a}_0$.

oder

1. Bei Anwesenheit des Positionsgebers umfasst der Schritt 1 die Teilschritte 1.1 bis 1.3:

1.1 Bewegen des Positionsgebers in eine feste Stellung.

1.2 Erfassen der Sensorsignale $a_1$ bis $a_r$ und speichern als Vektor $\vec{a}_F$.

1.3 Durchführen von folgenden Schritten für eine vorbestimmte Anzahl $v = 1$ bis $b \geq 1$ von verschiedenen Fremdfeldern, wobei die Zahl $b$ die Bedingung $b \leq r - 2$ erfüllt:

1.3.1 Anlegen des Fremdfeldes.
Das Fremdfeld ist beispielsweise ein homogenes Magnetfeld, das in eine beliebige Raumrichtung zeigt. Das Fremdfeld kann auch ein inhomogenes Fremdfeld sein, dem das Positionsmesssystem ausgesetzt ist. Um den Einfluss von Fremdfeldern zu eliminieren, sind also zusätzliche Sensoren 4 nötig. Die Mindestanzahl an Sensoren 4, die nötig ist, um eine Anzahl von b verschiedenen Fremdfeldern zu eliminieren, beträgt gemäss der obigen Gleichung $r = b + 2$.

1.3.2 Erfassen der Sensorsignale $a_1$ bis $a_r$ und Bilden eines Fremdfeldvektors $\vec{f}_v = \vec{a} - \vec{a}_F$ bzw. gegebenenfalls eines Offset kompensierten Fremdfeldvektors $\vec{f}_v = \vec{a} - \vec{a}_F - \vec{a}_0$,

Bei dem Fremdfeldvektor $\vec{f}_v$ ist somit der vom Positionsgeber erzeugte Anteil der Sensorsignale eliminiert.

Danach folgen die Schritte gemäss Variante 1 oder 2:
Bei der Variante 1 wird die Dimension des Vektorraums der Messvektoren vermindert. Die Variante 1 umfasst die Schritte:
2. Bilden einer vollständigen, orthonormierten Basis des Messvektorraumes mit den Schritten

2.1 Bilden von c orthonormierten Vektoren $\vec{g}_1, ..., \vec{g}_c$ des von den Fremdfeldvektoren $\vec{f}_1, ..., \vec{f}_b$ aufgespannten Vektorraums, dabei ist $c \leq b$. Für diese Basisvektoren gilt somit $\vec{g}_i \cdot \vec{g}_j = 0$ für $i \neq j$ und $\vec{g}_i \cdot \vec{g}_i = 1$ für $i = 1, ..., c$. Die orthonormierte Basis der Vektoren $\vec{g}_1, ..., \vec{g}_c$ kann beispielsweise mit dem Gram-Schmidt-Orthogonalisierungsverfahren, einem Standardverfahren der linearen Algebra, berechnet werden, welches die Fremdfeldvektoren $\vec{f}_1, ..., \vec{f}_b$ schrittweise orthogonalisiert.
2.2 Ergänzen der c Vektoren $\vec{g}_1, ..., \vec{g}_c$, mit $n = r - c$ weiteren Vektoren $\vec{g}_{c+1}, ..., \vec{g}_{c+n}$ zu einer vollständigen, orthonormierten Basis des $r$-dimensionalen Vektorraums der Signalvektoren. Für diese Basisvektoren gilt somit $\vec{g}_i \cdot \vec{g}_j = 0$ für $i \neq j$ und $\vec{g}_i \cdot \vec{g}_i = 1$ für $i = 1, ..., r$.

3. Bilden der Projektionsmatrix $P$ gemäss

$$P = \begin{pmatrix} \vec{g}_{c+1} \\ \vdots \\ \vec{g}_{c+n} \end{pmatrix} = \begin{pmatrix} g_{c+1,1} & \cdots & g_{c+1,r} \\ \vdots & & \vdots \\ g_{c+n,1} & \cdots & g_{c+n,r} \end{pmatrix}$$

Die $n$ Basisvektoren $\vec{g}_{c+1}, ..., \vec{g}_{c+n}$ bilden die Zeilen der $n \times r$ Matrix $P$. Die Anwendung von $P$ auf einen Signalvektor $\vec{a}$ liefert einen $n$-dimensionalen Vektor $\vec{q} = P\,\vec{a}$ bezüglich der neuen Basis $\vec{g}_{c+k}$, $k = 1, ..., n$, welcher keine Anteile von Fremdfeldvektoren enthält. In diesem Fall wird also beim Berechnen der Messvektoren die Dimension $r$ des Vektorraums der Signalvektoren vermindert um den Wert c, so dass der Raum der Messvektoren die Dimension $n = r - c$ hat.

Bei der Variante 2 wird die Dimension des Vektorraums der Messvektoren gegenüber der Dimension des Vektorraums der Signalvektoren nicht vermindert. Die Variante 2 umfasst die Schritte:

2. Bilden einer orthonormierten Basis von c Vektoren $\vec{g}_1, ..., \vec{g}_c$ des von den Fremdfeldvektoren $\vec{f}_1, ..., \vec{f}_b$ aufgespannten Vektorraums, dabei ist $c \le b$. Für diese Basisvektoren gilt somit $\vec{g}_i \cdot \vec{g}_j = 0$ für $i \neq j$ und $\vec{g}_i \cdot \vec{g}_i = 1$ für $i = 1, ..., c$. Die orthonormierte Basis der Vektoren $\vec{g}_h, ..., \vec{g}_c$ kann beispielsweise mit dem Gram-Schmidt-Orthogonalisierungsverfahren, einem Standardverfahren der linearen Algebra, berechnet werden, welches die Fremdfeldvektoren $\vec{f}_1, ..., \vec{f}_b$ schrittweise orthogonalisiert.

3. Bilden der Projektionsmatrix $P$ gemäss

$$P = \mathbb{I} - \sum_{i=1}^{c} \vec{g}_i \otimes \vec{g}_i \,,$$

wobei $\vec{g}_i \otimes \vec{g}_i$ die Tensorprodukte der Vektoren $\vec{g}_i$, d.h. die $r$ x $r$ Matrizen $\vec{g}_i \otimes \vec{g}_i = \begin{pmatrix} g_{i1}g_{i1} & \cdots & g_{i1}g_{ir} \\ \vdots & & \vdots \\ g_{ir}g_{i1} & \cdots & g_{ir}g_{ir} \end{pmatrix}$ sind. Die Formel

$$P = \mathbb{I} - \sum_{i=1}^{c} \vec{g}_i \otimes \vec{g}_i$$

lautet ausgeschrieben:

$$\begin{pmatrix} P_{11} & \dots & P_{1r} \\ \vdots & & \vdots \\ P_{r1} & \dots & P_{rr} \end{pmatrix} = \begin{pmatrix} 1 & & \\ & \ddots & \\ & & 1 \end{pmatrix} - \begin{pmatrix} g_{11}g_{11} & \cdots & g_{11}g_{1r} \\ \vdots & & \vdots \\ g_{1r}g_{11} & \cdots & g_{1r}g_{1r} \end{pmatrix} - ... - \begin{pmatrix} g_{c1}g_{c1} & \cdots & g_{c1}g_{cr} \\ \vdots & & \vdots \\ g_{cr}g_{c1} & \cdots & g_{cr}g_{cr} \end{pmatrix}$$

Die Anwendung der Projektionsmatrix $P$ auf einen Signalvektor $\vec{a}$ liefert einen $r$-dimensionalen Vektor $\vec{q} = P\,\vec{a}$ bezüglich der Standardbasis des Messvektorraumes, wobei der Vektor $\vec{q}$ orthogonal zum Unterraum der Fremdfeldvektoren steht. Die Dimension des Vektorraums der Messvektoren $\vec{q}$ ist gleich wie die Dimension des Vektorraums der Signalvektoren $\vec{a}$ Die Projektionsmatrix ist deshalb eine $r$ x $r$ Matrix.

Bestimmung der Matrix M

Die Bestimmung der Matrix $M$ erfolgt in der Kalibrierphase. Dazu werden im folgenden zwei Verfahren erläutert. Das erste Verfahren basiert darauf, dass "von aussen" dafür gesorgt wird, dass Kalibrierungspositionen ausgewählt werden, die über den ganzen Messbereich verteilt sind und ein genaues Ergebnis ermöglichen. Das zweite Verfahren ist ein Bootstrap-Prozess, der mit einer Fabrikeinstellung gestartet wird und dann iterativ bessere Kalibrierungspositionen erzeugt.

Verfahren 1

Die Bestimmung der Matrix $M$ erfolgt durch folgende Schritte:

1. Erfassen der Sensorsignale $a_{k1}$ bis $\alpha_{kr}$ der $r$ Sensoren 4 für eine vorbestimmte Anzahl von $k = 1$ bis $m$ Positionen des Positionsgebers, wobei $m \geq 3$.
Dieser Schritt liefert $m$ Signalvektoren $\vec{a}_1, \ldots, \vec{a}_m$ mit $\vec{a}_k = (a_{k1}, \ldots, a_{kr})$, $k = 1$ bis $m$.
2. Bilden von $m$ Messvektoren $\vec{q}_k$ mit $k = 1$ bis $m$ gemäss der vorbestimmten Funktion $g$ zu $\vec{q}_k = g(\vec{a}_k)$,

3. Bilden einer Matrix Q gemäss $$Q = \begin{pmatrix} \vec{q}_1 \\ \vdots \\ \vec{q}_m \end{pmatrix} = \begin{pmatrix} q_{11} & \cdots & q_{1n} \\ \vdots & & \vdots \\ q_{m1} & \cdots & q_{mn} \end{pmatrix}.$$ Die $m$ Messvektoren $\vec{q}_1, \ldots, \vec{q}_m$ bilden die Zeilen der Matrix Q. Die Matrix Q ist eine $m$ x $n$ Matrix, wobei die Anzahl $n$ ihrer Spalten von der vorbestimmten Funktion $g$ abhängt. Es gilt $n \leq r$. Wie weiter oben erläutert, kann beispielsweise bei der Eliminierung von Fremdfeldeinflüssen eine Verringerung auf $n \leq r$ erfolgen.
Die Bestimmung der Matrix $M$ aus der Matrix $Q$ erfolgt derart, dass die Transformation $\vec{p} = M \cdot \vec{q}$ eine lineare Abbildung ist, die jeden der $m$ Messvektoren $\vec{q}_k$ auf einen 2er-Vektor $\vec{p}_k$ abbildet, wobei die Spitzen der Vektoren $\vec{p}_k$ im Wesentlichen auf einem Kreis oder einem Kreisbogen liegen. "Im Wesentlichen" bedeutet bei idealen Gegebenheiten tatsächlich, in der Praxis jedoch meistens nur annähernd, d.h. die Spitzen der Vektoren $\vec{p}_k$ liegen dann beidseitig der Kreislinie verteilt. Der Kreis kann also ein verbeulter Kreis sein, mit Beulen nach innen und aussen. Da die Transformation $\vec{p} = M \cdot \vec{q}$ eine lineare Abbildung ist, kann die Matrix $M$ mit Methoden der linearen Algebra bestimmt werden, wobei diese Methoden eine Zerlegung der Matrix Q in zwei oder drei Matrizen beinhalten. Die Bestimmung der Matrix M erfordert keine statistischen Methoden, wie z.B. Ausgleichsrechnungen oder Fits. Die Bestimmung der Matrix $M$ aus der Matrix Q umfasst die folgenden Schritte 4 bis 9:
4. Bestimmen von drei Matrizen $U$, $S$ und $V^T$, die die Gleichung $Q = U \cdot S \cdot V^T$ erfüllen, wobei $U$ und $V$ orthogonale Matrizen sind, d.h. die Gleichungen erfüllen

$$U^\top \cdot U = \mathbb{I}$$

$$V^\top \cdot V = \mathbb{I},$$

und
$S$ eine positiv semidefinite $m$ x $n$ Diagonalmatrix ist. $U^T$ und $V^T$ sind die transponierten Matrizen der Matrizen U bzw. V. II bezeichnet die Einheitsmatrix. Die Gleichung
$Q = U \cdot S \cdot V^T$ lautet ausgeschrieben:

$$\begin{pmatrix} q_{11} & \cdots & q_{1n} \\ \vdots & & \vdots \\ q_{m1} & \cdots & q_{mn} \end{pmatrix} = \begin{pmatrix} U_{11} & \cdots & U_{1m} \\ \vdots & & \vdots \\ U_{m1} & \cdots & U_{mm} \end{pmatrix} \cdot \begin{pmatrix} s_1 & & & 0 & \cdots & 0 \\ & \ddots & & \vdots & & \vdots \\ & & s_l & 0 & \cdots & 0 \\ 0 & \cdots & 0 & 0 & \cdots & 0 \\ \vdots & & \vdots & \vdots & & \vdots \\ 0 & \cdots & 0 & 0 & \cdots & 0 \end{pmatrix} \cdot \begin{pmatrix} V_{11}^\top & \cdots & V_{1n}^\top \\ \vdots & & \vdots \\ V_{n1}^\top & \cdots & V_{nn}^\top \end{pmatrix}$$

Die Matrix U ist eine $m$, x $m$ Matrix, die Matrix V ist eine $n$ x $n$ Matrix. Die Werte $s_1$ bis $s_l$, $l \leq \min(m, n)$ der Diagonalwerte der Matrix $S$ heissen Singulärwerte der Matrix $Q$ und sind alle nicht negativ, d.h. $s_j \geq 0$ für $j = 1, \ldots, l \leq \min(m, n)$. ( $V_{jk}^\top$ bezeichnet das $jk$-Element der transponierten Matrix $V^T$.)
Die Bestimmung der Matrix $M$ benötigt nicht alle, sondern nur ausgewählte und von null verschiedene Elemente der Diagonalmatrix $S$, sowie mit diesen verknüpfte Elemente der Matrizen V und $U$. Die Matrizen $U$, $S$ und V werden deshalb mit Vorteil mit Hilfe der Singulärwertzerlegung (SVD), einer Standardoperation der linearen Algebra, berechnet, da die Singulärwertzerlegung die Elemente der Diagonalmatrix $S$ der Grösse nach ordnet, so dass $s_1 \geq s_2 \geq \ldots \geq s_l$. Die Singulärwertzerlegung liefert die Matrix V, durch Transponieren erhält man die Matrix $V^T$.
Die Bestimmung der Matrix $M$ erfolgt in Abhängigkeit eines ganzzahligen Parameters $h$, der die Bedingung $2 \leq h \leq l$ erfüllen muss. Die Genauigkeit der Matrix Mist umso grösser, je grösser der Wert des Parameters $h$ ist.
5. Bilden von Untermatrizen $\tilde{U}$, $\tilde{S}$ und $\tilde{V}^T$, wobei

- $\tilde{U}$ diejenige *m* x *h*-Untermatrix der *m* x *m* Matrix *U* ist, welche durch Streichen der Spalten *h* + 1 bis *m* gebildet wird,
- $\tilde{S}$ diejenige *h* x *h*-Untermatrix der *m* x *n* Matrix *S* ist, welche durch Streichen der Zeilen *h* + 1 bis *m* und Streichen der Spalten *h* + 1 bis *n* gebildet wird, und
- $\tilde{V}^T$ diejenige *h* x *n*-Untermatrix der *n* x *n* Matrix $V^T$ ist, welche durch Streichen der Zeilen *h* + 1 bis *n* gebildet wird.

6. Bilden einer 2 x *m* Hilfsmatrix *W*:
Wenn die Messvektoren in beliebiger Reihenfolge vorliegen, dann wird die Hilfsmatrix *W* gemäss Variante 1 gebildet. Wenn die Messvektoren $\vec{q}_k$ mit *k* = 1, ..., *m* aufsteigend oder absteigend entsprechend ihrer zugehörigen Position $\phi_k$ sortiert sind, dann wird die Hilfsmatrix *W* gemäss Variante 2 gebildet.

Variante 1 umfasst die Teilschritte:

6.1 Für *i* = 1 bis *m* Berechnen von $\alpha_i = \text{atan2}(U_{12}U_{i1} - U_{11}U_{i2}, U_{12}U_{i2} + U_{11}U_{i1})$.
6.2 Berechnen der Permutation *k*(*i*), welche die $\alpha_i$-Werte der Grösse nach sortiert, so dass gilt $\alpha_{k(i)} > \alpha_{k(i-1)}$ für *i* = 2, ..., *m*.
6.3 Bilden der Hilfsmatrix *W* gemäss

$$W_{i,k(j)} = \begin{cases} \sin(\frac{2\pi(j-1)}{m}), & i = 1 \\ \cos(\frac{2\pi(j-1)}{m}), & i = 2 \end{cases}, \text{für } j = 1 \text{ bis } m,$$

wobei $W_{i,k(j)}$ das *i*,*k*(*j*)-Element der Matrix *W* bedeutet, d.h. in der Spalte *k*(*j*) gegeben durch die vorher bestimmte Permutation der Indizes steht der Eintrag zum Index *j*. Mit anderen Worten, die Spalten der Matrix *W* werden in Abhängigkeit der Reihenfolge der Messvektoren sortiert.

Variante 2 umfasst den einzigen Schritt in Abhängigkeit der Hilfsgrösse *f* = 1 für aufsteigende und *f* = -1 für absteigende Reihenfolge entsprechend ihrer zugehörigen Position $\phi_k$

6.1 Bilden der Hilfsmatrix *W* gemäss

$$W_{ij} = \begin{cases} \sin(f \cdot \frac{2\pi(j-1)}{m}), & i = 1 \\ \cos(f \cdot \frac{2\pi(j-1)}{m}), & i = 2 \end{cases}, \text{für } j = 1 \text{ bis } m$$

7. Berechnen einer 2 x *h* Hilfsmatrix *T* gemäss $T = W\tilde{U}$
Diese Gleichung lautet ausgeschrieben:

$$\begin{pmatrix} T_{11} & \dots & T_{1h} \\ T_{21} & \dots & T_{2h} \end{pmatrix} = \begin{pmatrix} W_{11} & \dots & W_{1m} \\ W_{21} & \dots & W_{2m} \end{pmatrix} \cdot \begin{pmatrix} U_{11} & \dots & U_{1h} \\ \vdots & & \vdots \\ U_{m1} & \dots & U_{mh} \end{pmatrix}$$

8. Bilden einer 2 x *n* Hilfsmatrix *H*
Die Hilfsmatrix *H* wird aus der Hilfsmatrix *T* und den Untermatrizen $\tilde{S}$ und $\tilde{V}^T$ gebildet gemäss $H = T\tilde{S}^{-1}\tilde{V}^T$. Diese Gleichung lautet ausgeschrieben:

$$\begin{pmatrix} H_{11} & \dots & H_{1n} \\ H_{21} & \dots & H_{2n} \end{pmatrix} = \begin{pmatrix} T_{11} & \dots & T_{1h} \\ T_{21} & \dots & T_{2h} \end{pmatrix} \cdot \begin{pmatrix} \frac{1}{s_1} & & \\ & \ddots & \\ & & \frac{1}{s_h} \end{pmatrix} \cdot \begin{pmatrix} V_{11}^\top & \dots & V_{1n}^\top \\ \vdots & & \vdots \\ V_{h1}^\top & \dots & V_{hn}^\top \end{pmatrix}$$

9. Bilden der Matrix *M*
Mit der Berechnung der Hilfsmatrix *H* sind alle Schritte zur Bildung der Matrix *M* abgeschlossen, mit Ausnahme eines einzigen Schrittes, der jedoch nicht in allen Fällen erforderlich ist. Dieser Schritt betrifft die Bestimmung oder Überprüfung der Bewegungsrichtung. Bei einem Winkelsensor entspricht die Bewegungsrichtung dem Drehsinn. Dazu folgendes:

Wenn es im Normalbetrieb nur auf den Betrag $|\phi_1 - \phi_2|$ der Differenz von zwei gemessenen Positionen $\phi_1$ und $\phi_2$ ankommt, dann ist *M = H*.

Wenn es im Normalbetrieb auch auf die Bewegungsrichtung, d.h. das Vorzeichen der Differenz $\phi_1 - \phi_2$ ankommt, dann ist *M = N H,* wobei $N = \begin{pmatrix} d & 0 \\ 0 & 1 \end{pmatrix}$ eine Hilfsmatrix ist, deren Parameter *d* den Wert *d* = 1 oder *d* = -1 hat. Wenn die Messvektoren nach aufsteigenden oder absteigenden Positionen sortiert sind, dann ist *d* = 1, bzw. *N* = II (II bezeichnet die Einheitsmatrix) und folglich *M* = *H*. Die richtige Bewegungsrichtung ergibt sich hier dadurch, dass die Unterscheidung zwischen aufsteigenden und absteigenden Positionen durch den Parameter *f* in die Berechnung der Hilfsmatrix *W* einfliesst. Die Hilfsmatrix *W* enthält somit die Information über die Bewegungsrichtung. Wenn die Messvektoren nicht nach aufsteigenden oder absteigenden Positionen sortiert sind, sondern in beliebiger Reihenfolge vorliegen, dann kann die Bewegungsrichtung durch eine Messung mit den Teilschritten 9.1 bis 9.4 bestimmt werden:

9.1 Bringen des Positionsgebers in eine erste vorbestimmte Soll-Position $\psi_1$, Erfassen der Sensorsignale und Bilden des zugehörigen Messvektors, und Berechnen der zugehörigen Ist-Position $\phi_1$, und Bringen des Positionsgebers in eine zweite vorbestimmte Soll-Position $\psi_2$, Erfassen der Sensorsignale und Bilden des zugehörigen Messvektors, und Berechnen der zugehörigen Ist-Position $\phi_2$, wobei das Berechnen jeweils mit den Schritten C und D des Normalbetriebs erfolgt, wobei dazu die Matrix M = *H* benutzt wird.

9.2 Berechnen der Differenz $\psi_1 - \psi_2$,

9.3 Berechnen der Differenz $\phi_1 - \phi_2$, und

9.4 Setzen des Parameters *d* = +1 wenn das Vorzeichen der Differenz $\phi_1 - \phi_2$ gleich dem Vorzeichen der Differenz $\psi_1 - \psi_2$ ist, und andernfalls d = -1.

Das Bilden der Matrix *M* kann formal immer geschrieben werden als *M* = *N H,* da die Hilfsmatrix *N* die Einheitsmatrix II sein kann. Auch kann immer die Bewegungsrichtung bzw. der sie charakterisierende Parameter *d* durch eine Messung mit den Teilschritten 9.1 bis 9.4 bestimmt werden. Die Hilfsmatrix *N* lässt die Bewegungsrichtung entweder wie sie ist oder kehrt sie um.

Spezialfälle

Das beschriebene Verfahren kann mit geringen Änderungen auch in folgenden Spezialfällen genutzt werden:

1. Winkelmesssystem für einen vorbestimmten Winkelbereich
Die Positionen liegen in einem begrenzten Intervall $\phi \in [\phi_{min}, \phi_{max}]$ statt $\phi \in [0, 2\pi]$. (Bei einem linearen Positionsmesser entspricht das der Nutzung von nur einer Fraktion der vollen Periodendistanz D).
Die Elemente der Hilfsmatrix *W* werden bei ungeordneten Messvektoren berechnet gemäss

$$W_{i,k(j)} = \begin{cases} \sin(\frac{(\phi_{max}-\phi_{min})(j-1)}{m}), & i=1 \\ \cos(\frac{(\phi_{max}-\phi_{min})(j-1)}{m}), & i=2 \end{cases}, \text{für } j = 1 \text{ bis } m,$$

wobei $\phi_{min}$ und $\phi_{max}$ die untere bzw. obere Grenze des genutzten Winkelbereichs bezeichnen und *k*(*j*) die Permutation darstellt, welche die Messvektoren $\vec{q}_j$ in aufsteigender oder absteigender Reihenfolge nach ihren Positionen ordnet,
und bei geordneten Messvektoren in Abhängigkeit der Hilfsgrösse *f* = 1 für aufsteigende und *f* = -1 für absteigende Reihenfolge gemäss

$$W_{ij} = \begin{cases} \sin(f \cdot \frac{(\phi_{max}-\phi_{min})(j-1)}{m}), & i=1 \\ \cos(f \cdot \frac{(\phi_{max}-\phi_{min})(j-1)}{m}), & i=2 \end{cases}, \text{für } j = 1 \text{ bis } m.$$

2. Winkelmesssystem mit einem Positionsgeber, der einen Multipolcharakter aufweist

Der Positionsgeber kann einen Multipolcharakter aufweisen, insbesondere wenn der Positionsgeber ein Magnet ist, jedoch auch, wenn der Positionsgeber Spulen aufweist. Der Multipolcharakter des Magneten bzw. der Spulen wird durch einen Parameter *e* charakterisiert, der die Anzahl der Repetitionen des Feldverlaufs bei einer vollständigen Drehung des Positionsgebers angibt. Bei einem Magneten mit einem dipolartigen Feld beträgt $e$ = 1, während bei einem quadrupolartigen Feld $e$ = 2 gilt.

Die Elemente der Hilfsmatrix $W$ werden bei geordneten Messvektoren in Abhängigkeit der Hilfsgrösse $f$ = 1 für aufsteigende und $f$ = -1 für absteigende Reihenfolge berechnet gemäss

$$W_{ij} = \begin{cases} \sin(f\, e \cdot \frac{(\phi_{max}-\phi_{min})(j-1)}{m}),\ i=1 \\ \cos(f\, e \cdot \frac{(\phi_{max}-\phi_{min})(j-1)}{m}),\ i=2 \end{cases}, \text{für } j = 1 \text{ bis } m,$$

und bei ungeordneten Messvektoren gemäss

$$W_{i,k(j)} = \begin{cases} \sin(e \cdot \frac{(\phi_{max}-\phi_{min})(j-1)}{m}),\ i=1 \\ \cos(e \cdot \frac{(\phi_{max}-\phi_{min})(j-1)}{m}),\ i=2 \end{cases}, \text{für } j = 1 \text{ bis } m,$$

Die Berechnung der Position $\phi$ aus dem 2er-Vektor $\vec{p}$ erfolgt in diesem Fall gemäss

$$\phi = \frac{f(\vec{p})}{e} = \frac{f(p_1, p_2)}{e}.$$

Bestimmung der Matrix M im Fall n = 2

Die Bestimmung der Matrix $M$ bei $n$ = 2 kann auf drei verschiedene Arten erfolgen, nämlich gemäss dem allgemeinen Verfahren mit den vorgängig beschriebenen Schritten 1-9, oder auf vereinfachte Weise gemäss einer der beiden folgenden Methoden:

Die Methode 1 umfasst:

die Schritte 1 bis 5 des allgemeinen Verfahrens,
das Bilden einer Hilfsmatrix $H$ zu $H = \tilde{S}^{-1} \tilde{V}^T$, und
das Bilden der Matrix $M$ gemäss Variante 1 oder Variante 2:

Variante 1
Wenn es im Normalbetrieb nur auf den Betrag $|\phi_1 - \phi_2|$ der Differenz von zwei gemessenen Positionen $\phi_1$ und $\phi_2$ ankommt, dann ist $M = H$.
Variante 2
Wenn es im Normalbetrieb auch auf das Vorzeichen der Differenz $\phi_1 - \phi_2$ ankommt, dann ist $M = N\, H$.
Wenn die Messvektoren nach aufsteigenden oder absteigenden Positionen sortiert sind, dann kann der Parameter $d$ mit der Hilfsgrösse $f$ = 1 für aufsteigende, resp. $f$ = -1 für absteigende Reihenfolge und aus ausgewählten Elementen der Matrix $U$ berechnet werden zu

$$d = f \cdot \frac{U_{12}U_{21} - U_{11}U_{22}}{|U_{12}U_{21} - U_{11}U_{22}|}.$$

Wenn die Messvektoren nicht nach aufsteigenden oder absteigenden Positionen sortiert sind, sondern in beliebiger Reihenfolge vorliegen, dann kann der Parameter $d$ durch die oben beschriebene Messung mit den Teilschritten 9.1 bis 9.4 bestimmt werden.

Bei der Methode 1 entfällt also die Bestimmung der Hilfsmatrizen $W$ und $T$.

Die Methode 2 umfasst die Schritte 1 bis 3 des allgemeinen Verfahrens. Dies liefert die $m$ x 2 Matrix $Q$. Die Schritte 4 bis 8 des allgemeinen Verfahrens werden durch die folgenden beiden Schritte 4 und 5 ersetzt:

4. Bestimmen von zwei Matrizen $U$ und $B$, welche die Gleichung $Q = U \cdot B$ erfüllen, wobei $U$ eine $m$ x 2 Matrix mit orthogonalen Spalten ist, d.h. $U^T \cdot U = \mathbb{I}$ und $B$ eine symmetrische, positiv definite 2 x 2 Matrix ist. Die Gleichung $Q = U \cdot B$ lautet ausgeschrieben:

$$\begin{pmatrix} q_{11} & q_{12} \\ \vdots & \vdots \\ q_{m1} & q_{m2} \end{pmatrix} = \begin{pmatrix} U_{11} & U_{12} \\ \vdots & \vdots \\ U_{m1} & U_{m2} \end{pmatrix} \cdot \begin{pmatrix} B_{11} & B_{12} \\ B_{21} & B_{22} \end{pmatrix}$$

Die Matrix $B$ kann berechnet werden durch die Teilschritte

4.1 Bildung einer symmetrischen, positiv definiten 2 x 2 Hilfsmatrix $n$ zu $D = Q^T \cdot Q$,
4.2 Berechnen der Matrix $B$ als Quadratwurzel gemäss $B = D^{1/2}$ . Die Berechnung der Quadratwurzel einer Matrix ist eine Standardprozedur der linearen Algebra.

Die Matrix $U$ ergibt sich zu $U = Q B^{-1}$, wobei die Matrix $U$ jedoch höchstens für die Berechnung der Bewegungsrichtung benötigt wird.
5. Bilden einer Hilfsmatrix $H$ gemäss $H = B^{-1}$.

Danach folgt der Schritt 9 des allgemeinen Verfahrens, mit der nachfolgend beschriebenen Änderung, wenn die Messvektoren aufsteigend oder absteigend nach ihren Positionen geordnet sind. Weil bei dieser Methode die Hilfsmatrix $W$ nicht berechnet wird, fliesst die richtige Bewegungsrichtung nicht automatisch ein. Sie kann aber mit der Hilfsgrösse $f = 1$ für aufsteigende, resp. $f = -1$ für absteigende Reihenfolge und aus ausgewählten Elementen der Matrix $U$ berechnet werden zu:

$$d = f \cdot \frac{U_{12}U_{21} - U_{11}U_{22}}{|U_{12}U_{21} - U_{11}U_{22}|}.$$

Absolute Positionen

Wenn im Normalbetrieb auch absolute Positionen ermittelt werden sollen, dann ist eine Bestimmung der Nulllage erforderlich, beispielsweise durch die folgenden Schritte:

- Bringen des Positionsgebers in die Nulllage,
- Ermitteln der Position $\phi_0$ mit den Schritten A bis D des Normalbetriebs, und
- Ändern der Funktion $f(\vec{p})$ auf $f(\vec{p}) = f(\vec{p}) - \phi_0$.

Die Fig. 6 bis 8 illustrieren die beschriebenen Verfahrensschritte. Auf der linken Seite der Figuren Fig. 6 bis 8 und auch bei den weiter unten erläuterten Fig. 9 und 10 ist jeweils das Positionsmesssystem symbolisch dargestellt. Im einzelnen:
Die Fig. 6 illustriert den Normalbetrieb des Positionsmesssystems. Der Positionsgeber befindet sich in der Position $\phi$ und erzeugt in den Sensoren 4 die Sensorsignale $a_1, ..., a_r$. Diese Signale werden offsetkompensiert mit dem Offsetvektor $\vec{a}_0$ und fremdfeldkompensiert mit der Projektionsmatrix $P$ (je optional), was den Messvektor $\vec{q}$ liefert. Anschliessend erfolgt die Berechnung des 2er-Vektors $\vec{p}$ durch Multiplikation der Matrix M mit dem Messvektor $\vec{q}$. Aus den Komponenten von $\vec{p}$ wird schliesslich die Position $\phi$ gemäss $\phi = \text{atan2}(p_2, p_1)$, oder einer anderen Funktion, berechnet.

Die Fig. 7 illustriert die Bestimmung der Projektionsmatrix $P$ in der Kalibrierphase. Dazu werden b Fremdfelder an das Positionsmesssystem angelegt, welche für die Fremdfelder $j = 1, ..., b$ die Signalvektoren $\vec{a}_j = (a_{j1}, ..., a_{jr})$ liefern. Aus den Signalvektoren $\vec{a}_j$ werden, optional offsetkompensierte, Fremdfeldvektoren $\vec{f}_j$ gebildet. Daraus wird, beispielsweise mit dem Gram-Schmidt-Verfahren GS, die orthonormierte Basis $\vec{g}_1, ..., \vec{g}_c$ des von den Fremdfeldvektoren $\vec{f}_j$

aufgespannten Unterraums gebildet. Aus den Basisvektoren $\vec{g}_j$ wird die Projektionsmatrix $P$ berechnet, indem von der Einheitsmatrix die als Tensorprodukte aus den Basisvektoren gewonnenen Matrizen $\vec{g}_j \otimes \vec{g}_j$ subtrahiert werden.

Die Fig. 8 illustriert die Bestimmung der Matrix $M$ in der Kalibrierphase. Dazu werden die Signalvektoren $\vec{a}_k = (a_{k1}, ..., a_{kr})$, $k = 1, ..., m$ mit dem Offsetvektor $\vec{a}_0$ und der Projektionsmatrix $P$ offset- und fremdfeldkompensiert (je optional). Die damit gewonnenen Messvektoren $\vec{q}_k$ bilden die Zeilen der Matrix Q. Die Matrix Q wird sodann in die drei Matrizen $\tilde{U}$, $\tilde{S}$ und $\tilde{V}^T$ zerlegt. In Abhängigkeit des vorbestimmten Parameters $h$ werden die Untermatrizen $\tilde{U}$, $\tilde{V}^T$ und $\tilde{S}$ aus $U$, V und $S$ bestimmt. Mit den Hilfsmatrizen $T$ und $N$ wird sodann die Matrix $M$ berechnet. Dazu wird aus der Hilfsmatrix $W$ und $\tilde{U}$ die Matrix $T = W\,\tilde{U}$ gebildet.

Verfahren 2: Bootstrap-Verfahren

Die Bestimmung der Matrix $M$ kann auch mittels eines Bootstrap-Verfahrens erfolgen. Das Bootstrap-Verfahren umfasst herstellerseitig eine Initialisierung, sowie bei der Inbetriebnahme eine Messdatenerfassung und einen iterativen Prozess zur Erhöhung der Genauigkeit der Matrix $M$. Das Bootstrap-Verfahren umfasst folgende Schritte:

1. Setzen eines Index i = 0 und Festlegen einer vorbestimmten Startmatrix $M^{(0)}$.
Die Startmatrix $M^{(0)}$ ist eine herstellerseitige Initialisierung der Matrix $M = M^{(0)}$, so dass mit dem Positionsmesssystem - eventuell ungenaue - Positionsberechnungen durchgeführt werden können.

2. Erfassen und Zwischenspeichern einer Vielzahl von Messvektoren $\vec{q}$ gemäss den Schritten A und B des Normalbetriebs.

3. Iterative Bestimmung von Matrizen $M^{(i)}$ (mit i > 0) durch wiederholtes Durchführen der folgenden Schritte:

   3.1. Setzen der Matrix $M$ zu $M = M^{(i)}$

   3.2. Erhöhen des Index $i$ um 1

   3.3. Berechnen der Positionen $\phi$ der zwischengespeicherten Messvektoren $\vec{q}$ gemäss den Schritten C und D des Normalbetriebs,

   3.4. Auswählen einer Anzahl von k = 1 bis $m$ zwischengespeicherten Messvektoren $\vec{q}_k$, deren zugehörige Positionen $\phi_k$ ein vorbestimmtes Kriterium erfüllen,

   3.5. Bilden einer Matrix $Q$ gemäss $$Q = \begin{pmatrix} \vec{q}_1 \\ \vdots \\ \vec{q}_m \end{pmatrix}$$

   3.6. Bestimmen einer neuen Matrix $M^{(i)}$ aus der Matrix Q derart, dass die Transformation $\vec{p} = M \cdot \vec{q}$ eine lineare Abbildung ist, die jeden der $m$ ausgewählten Messvektoren $\vec{q}_k$ auf einen 2er-Vektor $\vec{p}_k$ abbildet, bis sich die Matrix $M^{(i)}$ innerhalb einer vorgegebenen Toleranz nicht mehr von der Matrix $M^{(i-1)}$ der vorangegangen Iteration unterscheidet, wobei die Spitzen der Vektoren $\vec{p}_k$. mit zunehmender Erhöhung des Index i im Wesentlichen auf einem Kreis (6) oder einem Kreisbogen zu liegen kommen. Damit endet der Bootstrap-Prozess (entweder mit $M = M^{(i)}$ oder $M = M^{(i-1)}$).

Anschliessend folgt gegebenenfalls eine Festlegung der Nulllage, wie dies weiter oben beschrieben ist.

Die Einzeliterationen führen adaptiv zu verbesserten Matrizen $M^{(i)}$, weil in jedem Schritt genauere Positionen $\phi$ der zwischengespeicherten Messvektoren $\vec{q}$ bestimmt werden können, so dass die Matrix $Q$ nach dem vorgegebenen Kriterium aus besser geeigneten Messvektoren $\vec{q}$ gebildet wird und damit zu einer genaueren Matrix $M$ führt. Der gewünschte Drehsinn ist in der Startmatrix $M$ bereits enthalten und ändert bei den Iterationen nicht.

Rekalibrierung

Das Verfahren erlaubt auch eine Rekalibrierung im laufenden Betrieb, welche in zwei Schritten durchgeführt wird (und dem Bootstrap Prozess ähnlich ist):

1. Erfassen von Messergebnissen für die Rekalibrierung mit den Schritten A bis D des Normalbetriebs mit Hilfe der Teilschritte:

1.1 Erfassen und Zwischenspeichern von Messvektoren $\vec{q}$ gemäss den Schritten A und B für eine Vielzahl von Messungen, und

1.2 Berechnen der zugehörigen Positionen $\phi$ gemäss den Schritten C und D und Zwischenspeichern dieser Positionen $\phi$ für alle gespeicherten Messvektoren $\vec{q}$.

2. Die eigentliche Rekalibrierung erfolgt mit den folgenden Schritten 2.1 bis 2.4

2.1 Auswählen von $m$ zwischengespeicherten Messvektoren $\vec{q}$, deren zugehörige Positionen $\phi$ ein vorbestimmtes Kriterium erfüllen,

2.2 Neubilden der Matrix $Q$ aus den ausgewählten Messvektoren $\vec{q}$.

2.3 Neubestimmen der Matrix $M$ aus der Matrix Q, und

2.4 gegebenenfalls Neubestimmen der Nulllage.

Das vorbestimmte Kriterium umfasst vorzugsweise eines oder mehrere der folgenden Kriterien:

- die Positionen $\phi$ sind über den ganzen Bereich von 0 bis $2\pi$ verteilt,
- die Positionen $\phi$ sind innerhalb eines vorgegebenen Toleranzkriteriums gleichverteilt,
- die Messvektoren $\vec{q}$ sind in aufsteigender oder in absteigender Reihenfolge der Positionen $\phi$ geordnet.

Eine grosse Anzahl von Messvektoren verbessert die Kalibration bei schlechter Gleichverteilung der Positionen $\phi$.

Gleichverteilung innerhalb eines vorgegebenen Toleranzkriteriums bedeutet, dass die $k$ = 1 bis $m$ Positionen $\phi_k$ der ausgewählten Messvektoren $\vec{q}_k$ bis auf eine festgelegte Toleranz $\Delta\phi$ den Werten $\frac{(k-1)\cdot 2\pi}{m}$ entsprechen, d.h. es gilt $\left|\phi_k - \frac{(k-1)\cdot 2\pi}{m}\right| < \Delta\phi.$

Plausibilitätsprüfung

Die Lage des Sensorchips 3 kann sich im Laufe der Zeit relativ zur Lage der Drehachse 1 bzw. der Achse $x$ ändern. Um dies zu erkennen, kann das Verfahren um eine Plausibilitätsprüfung erweitert werden, sofern die Dimension n des Vektorraums der Messvektoren n > 2 ist. Das Verfahren benötigt dazu eine weitere $n$ x $n$ Matrix $C$, die in der Kalibrierphase bestimmt und im Normalbetrieb für die Plausibilitätsprüfung verwendet wird.

Die Kalibrierphase umfasst dann zusätzlich den folgenden Schritt:

Bilden der Matrix $C$ aus der Untermatrix $\tilde{V}$ gemäss

$$C = \mathbb{I} - \tilde{V} \cdot \tilde{V}^{\top}$$

Diese Gleichung lautet ausgeschrieben:

$$\begin{pmatrix} C_{11} & \dots & C_{1n} \\ \vdots & & \vdots \\ C_{n1} & \dots & C_{nn} \end{pmatrix} = \begin{pmatrix} 1 & & \\ & \ddots & \\ & & 1 \end{pmatrix} - \begin{pmatrix} V_{11} & \dots & V_{1h} \\ \vdots & & \vdots \\ V_{n1} & \dots & V_{nh} \end{pmatrix} \cdot \begin{pmatrix} V_{11}^\top & \dots & V_{1n}^\top \\ \vdots & & \vdots \\ V_{h1}^\top & \dots & V_{hn}^\top \end{pmatrix}$$

Der Normalbetrieb umfasst zusätzlich den folgenden Schritt E:
E) Berechnen eines Prüfwertes mit den Teilschritten E.1 bis E.3:

E.1 Berechnen eines Vektors $\vec{d}$ zu

$$\vec{d} = C\,\vec{q}$$

Diese Gleichung lautet ausgeschrieben

$$\begin{pmatrix} d_1 \\ \vdots \\ d_n \end{pmatrix} = \begin{pmatrix} C_{11} & \dots & C_{1n} \\ \vdots & & \vdots \\ C_{n1} & \dots & C_{nn} \end{pmatrix} \cdot \begin{pmatrix} q_1 \\ \vdots \\ q_n \end{pmatrix}$$

E.2 Berechnen eines Prüfwerts $v$ aus dem Vektor $\vec{d}$

Der Prüfwert kann beispielsweise die Grösse $v = \sqrt{\frac{\sum_{l=1}^{N_s} d_l^2}{\sum_{l=1}^{N_s} q_l^2}}$ sein. Der Prüfwert kann auch eine andere Grösse sein, insbesondere eine, die die Eigenschaft einer Vektornorm aufweist. Eine Vektornorm hat typischerweise folgende Eigenschaften:

(i) $v(\vec{d}) = 0$ genau dann, wenn $\vec{d} = \vec{0}$ (Nullvektor) ist,
(ii) für jedes $R \in \mathbb{R}$ (Menge der reellen Zahlen) gilt $v(R \cdot \vec{d}) = |R| \cdot v(\vec{d})$, und
(iii) für alle Vektoren $\vec{d}_1$, $\vec{d}_2$ gilt $v(\vec{d}_1 + \vec{d}_2) \leq v(\vec{d}_1) + v(\vec{d}_2)$.
Der Prüfwert kann auch eine Grösse sein, die nur die Eigenschaften (i) und (ii) einer solchen Vektornorm erfüllt.

E.3 Auslösen einer vorbestimmten Aktion, wenn der Prüfwert $v$ einen vorbestimmten Wert übersteigt.

Die Fig. 9 illustriert die Bestimmung der Matrix C in der Kalibrierphase. Diese Berechnung verläuft bis zur Bestimmung der drei Matrizen $\tilde{U}$, $\tilde{S}$ und $\tilde{V}^T$ analog zur Bestimmung der Matrix $M$. Die Matrix C wird dann berechnet, indem von der Einheitsmatrix das Produkt der Untermatrix $\tilde{V}$ von der Matrix V mit ihrer transponierten $\tilde{V}^T$ subtrahiert wird.
Die Fig. 10 veranschaulicht die Plausibilitätsprüfung. Diese Überprüfung erfolgt im Normalbetrieb. Die Berechnung ist bis zur Bestimmung von $\vec{q}$ analog zur Berechnung der Position (Fig. 6). Für die Plausibilitätsprüfung wird aus dem Messvektor $\vec{q}$ mittels der Matrix C der $n$-Komponentenvektor $\vec{d}$ und aus diesem schliesslich die Prüfgrösse $v$ berechnet.

Positionsbestimmung und Fremdfeldunterdrückung im Spezialfall n = 2 und r > n

Die Bestimmung der Position $\phi$ eines rotierenden oder sich linear bewegenden Positionsgebers kann eine Fremdfeldkompensation, bei der die Projektionsmatrix $P$ die Signalvektoren der Dimension $r$ auf Messvektoren der Dimension $n$ = 2 abbildet, und eine Berechnung der Position $\phi$ aus den Komponenten $q_1$ und $q_2$ eines Messvektors $\vec{q}$ gemäss einem klassischen Verfahren beinhalten. Die Bestimmung der Projektionsmatrix $P$ erfolgt in einer Kalibrierungsphase gemäss der oben beschriebenen Variante 1 mit den Werten $b = r - 2$ und $c = b$.
Im Normalbetrieb erfolgt die Bestimmung der Position $\phi$ wie folgt:

A) Erfassen der Sensorsignale $a_1$ bis $a_r$ der Sensoren und Bilden eines Signalvektors $\vec{a} = (a_1, ..., a_r)$.

B) Bilden eines Messvektors $\vec{q}$ gemäss $\vec{q} = g(\vec{a})$, wobei

$g(\vec{a}) = P \cdot \vec{a}$, wenn (nur) eine Fremdfeldkorrektur durchgeführt wird, oder

$g(\vec{a}) = P \cdot (\vec{a} - \vec{a}_0)$, wenn eine Offset- und Fremdfeldkorrektur durchgeführt wird.

Der Vektor $\vec{q}$ ist ein 2er-Vektor mit den Komponenten $q_1$ und $q_2$. Das Berechnen des Vektors $\vec{p}$ gemäss $\vec{p} = M \cdot \vec{q}$ vereinfacht sich in diesem Fall zu $\vec{p} = \vec{q}$, da die Matrix $M$ in diesem Spezialfall die Einheitsmatrix ist. Wenn die Bewegung des Positionsgebers eine Abfolge von Messvektoren liefert, deren Spitzen auf einem Kreis oder Kreisbogen liegen, dann folgt der Schritt:

C) Bestimmen der Position $\phi$ aus den Komponenten $p_1$ und $p_2$ des Vektors $\vec{p}$ mittels einer vorbestimmten Funktion $f(\vec{p})$ zu $\phi = f(\vec{p}) = f(p_1,p_2)$, wobei die vorbestimmte Funktion $f(\vec{q}) = f(q_1,q_2)$ auf den Gleichungen $q_1 = cos(\phi)$ und $q_2 = \sin(\phi)$ basiert.

Wenn die Bewegung des Positionsgebers eine Abfolge von Messvektoren liefert, deren Spitzen auf einer Ellipse liegen, dann ist die Kalibrierungsphase dahingehend zu ergänzen, dass nach der Bestimmung der Projektionsmatrix $P$ noch die Parameter der Ellipse bestimmt werden, so dass dann die Berechnung der Position $\phi$ aufgrund der Werte $q_1$ und $q_2$ und der Ellipsenparameter erfolgen kann. Die Messwertpaare $q_1$ und $q_2$ des Messvektors $\vec{q}$ können in der Kalibrierungsphase wie auch im Normalbetrieb zum Beispiel gemäss dem Verfahren der internationalen Veröffentlichung WO 2005124286 A1 verarbeitet werden, wobei die Werte $q_1$ und $q_2$ den dort als Messwertpaare $(x_i,y_i)$ mit $i = 1, \ldots, N$ bezeichneten Messwerten entsprechen, oder gemäss irgend einem anderen bekannten Verfahren für näherungsweise sinus- oder cosinusförmige Messsignale. D.h. auch hier kann eine Funktion $f(\vec{q})$ bestimmt werden, die die Position $\phi$ zu $\phi = f(\vec{q})$ ergibt.

Dieses Verfahren ermöglicht die Trennung von Fremdfelddetektion und Positionsbestimmung auf eine Weise, bei der es nicht nötig ist, die Sensoren ganz präzise anzuordnen und in der Empfindlichkeit anzugleichen, und bei dem keine Trennung in Sensoren für die Bestimmung der Position und in Sensoren für die Ermittlung von Fremdfeldern erforderlich ist.

## Patentansprüche

1. Verfahren zur Bestimmung der Position $\phi$ eines Positionsgebers eines Positionsmesssystems, wobei das Positionsmesssystem den Positionsgeber und eine Anzahl von wenigstens $r = 2$ Sensoren (4) umfasst, die je ein Sensorsignal $a_j$ mit $j = 1$ bis $r$ abgeben, wobei das Verfahren eine Kalibrierungsphase und einen Normalbetrieb aufweist, wobei im Normalbetrieb die Position $\phi$ des Positionsgebers bestimmt wird mit den Schritten:

A) Erfassen der Sensorsignale $a_1$ bis $a_r$ der Sensoren (4) und Bilden eines Signalvektors $\vec{a} = (a_1, \ldots, a_r)$,
B) Bilden eines Messvektors $\vec{q}$ gemäss einer vorbestimmten linearen Funktion $g$ zu $\vec{q} = g(\vec{a})$, wobei der Messvektor $\vec{q}$ eine Anzahl von $n$ Komponenten aufweist, mit $2 \leq n \leq r$,
C) Berechnen eines Vektors $\vec{p} = M \cdot \vec{q}$, wobei $\vec{p}$ ein 2er-Vektor mit den Komponenten $p_1$ und $p_2$ und $M$ eine 2 x $n$ Matrix ist, und
D) Bestimmen der Position $\phi$ mittels einer vorbestimmten Funktion $f(\vec{p})$ zu $\phi = f(\vec{p})$, wobei die vorbestimmte Funktion $f(\vec{p}) = f(p_1,p_2)$ auf den Gleichungen $p_1 = cos(\phi)$ und $p_2 = sin(\phi)$ basiert,

und wobei in der Kalibrierungsphase die Matrix $M$ entweder ermittelt wird mit den Schritten:

Erfassen der Sensorsignale $a_{k1}$ bis $a_{kr}$ der Sensoren (4) für eine vorbestimmte Anzahl von $k = 1$ bis $m \geq 3$ Positionen des Positionsgebers (2),
aus den Sensorsignalen Bilden von $m$ Signalvektoren $\vec{a}_k = (a_{k1}, \ldots, a_{kr})$ mit $k = 1$ bis $m$, Bilden von $m$ Messvektoren $\vec{q}_k$ mit $k = 1$ bis $m$ gemäss der vorbestimmten Funktion $g$ zu $\vec{q}_k = g(\vec{a}_k)$,

Bilden einer Matrix $Q$ gemäss $Q = \begin{pmatrix} \vec{q}_1 \\ \vdots \\ \vec{q}_m \end{pmatrix}$, und

Bestimmen der Matrix $M$ aus der Matrix Q derart, dass die Transformation $\vec{p} = M \cdot \vec{q}$ eine lineare Abbildung ist, die jeden der $m$ Messvektoren $\vec{q}_k$ auf einen 2er-Vektor $\vec{p}_k$ abbildet, wobei die Spitzen der Vektoren $\vec{p}_k$ im Wesentlichen auf einem Kreis (6) oder einem Kreisbogen liegen,

oder mittels eines Bootstrap-Verfahrens mit den Schritten:

Setzen eines Index i = 0 und Festlegen einer vorbestimmten Startmatrix $M^{(0)}$, Erfassen und Zwischenspeichern einer Vielzahl von Messvektoren $\vec{q}$ gemäss den Schritten A und B des Normalbetriebs,
Wiederholtes Durchführen der folgenden Schritte:

Setzen der Matrix $M$ zu $M = M^{(i)}$
Erhöhen des Index $i$ um 1,
Berechnen der Positionen $\phi$ der zwischengespeicherten Messvektoren $\vec{q}$ gemäss den Schritten C und D des Normalbetriebs,
Auswählen einer Anzahl von k = 1 bis $m$ zwischengespeicherten Messvektoren $\vec{q}_k$, deren zugehörige Positionen $\phi_k$ ein vorbestimmtes Kriterium erfüllen,
Bilden einer Matrix Q gemäss $Q = \begin{pmatrix} \vec{q}_1 \\ \vdots \\ \vec{q}_m \end{pmatrix}$,
Bestimmen einer neuen Matrix $M^{(i)}$ aus der Matrix Q derart, dass die Transformation $\vec{p} = M \cdot \vec{q}$ eine lineare Abbildung ist, die jeden der $m$ ausgewählten Messvektoren $\vec{q}_k$ auf einen 2er-Vektor $\vec{p}_k$ abbildet,

bis sich $M^{(i)}$ innerhalb einer vorgegebenen Toleranz nicht mehr von der Matrix $M^{(i-1)}$ unterscheidet, wobei die Spitzen der Vektoren $\vec{p}_k$ mit zunehmender Erhöhung des Index i im Wesentlichen auf einem Kreis (6) oder einem Kreisbogen zu liegen kommen.

2. Verfahren nach Anspruch 1, **dadurch gekennzeichnet, dass** das Positionsmesssystem mindestens drei Sensoren umfasst.

3. Verfahren nach Anspruch 1 oder 2, **dadurch gekennzeichnet, dass** das Bestimmen der Matrix $M$ folgende Schritte umfasst:

Bestimmen von zwei Matrizen $U$ und $B$, welche die Gleichung $Q = U \cdot B$ erfüllen, wobei $U$ eine $m$ x 2 Matrix mit $U^T \cdot U = \mathbb{I}$ und $B$ eine symmetrische, positiv definite 2 x 2 Matrix ist, durch Bilden einer Hilfsmatrix $D$ zu $D = Q^T \cdot Q$,
Berechnen der Matrix $B$ gemäss $B = D^{1/2}$,
Bilden einer Hilfsmatrix $H$ zu $H = B^{-1}$,
Bilden der Matrix $M$ zu $M = N H$, wobei $N = \begin{pmatrix} d & 0 \\ 0 & 1 \end{pmatrix}$ eine Hilfsmatrix ist, deren Parameter $d$ den Wert 1 oder -1 hat.

4. Verfahren nach Anspruch 1 oder 2, **dadurch gekennzeichnet, dass** das Bestimmen der Matrix $M$ folgende Schritte umfasst:

Bestimmen von drei Matrizen $U$, $S$ und $V^T$, die die Gleichung $Q = U \cdot S \cdot V^T$ erfüllen, wobei $U$ eine orthogonale $m$ x $m$ Matrix, $V^T$ eine orthogonale $n$ x $n$ Matrix und $S$ eine positiv semidefinite $m$ x $n$ Diagonalmatrix ist, deren Diagonalelemente nach absteigender Grösse geordnet sind,
Bilden von Untermatrizen $\tilde{U}$, $\tilde{S}$ und $\tilde{V}^T$ in Abhängigkeit eines vorbestimmten Parameters $h$, der die Bedingung $2 \leq h \leq l$ erfüllt, wobei $l \leq min(m,n)$ die Anzahl der von Null verschiedenen Diagonalelemente von $S$ bezeichnet und wobei

$\tilde{U}$ diejenige *m* x *h* Untermatrix der Matrix *U* ist, welche durch Streichen der Spalten *h* + 1 bis *m* gebildet wird, und
$\tilde{S}$ diejenige *h* x *h* Untermatrix der Matrix *S* ist, welche durch Streichen der Zeilen *h* + 1 bis *m* und Streichen der Spalten *h* + 1 bis *n* gebildet wird, und
$\tilde{V}^T$ diejenige *h* x *n* Untermatrix der Matrix $V^T$ ist, welche durch Streichen der Zeilen *h* + 1 bis *n* gebildet wird,

wenn $n \geq 2$ Bilden einer Hilfsmatrix *H* aus Elementen der Untermatrizen $\tilde{U}$, $\tilde{S}$ und $\tilde{V}^T$, oder im Spezialfall *n* = 2 alternativ Bilden der Hilfsmatrix *H* zu $H = \tilde{S}^{-1} \tilde{V}^T$, und

Bilden der Matrix *M* zu *M* = *N H,* wobei $N = \begin{pmatrix} d & 0 \\ 0 & 1 \end{pmatrix}$ eine Hilfsmatrix ist, deren Parameter *d* den Wert 1 oder -1 hat.

5. Verfahren nach Anspruch 4, **dadurch gekennzeichnet, dass** das Bilden der Hilfsmatrix *H* aus Elementen der Untermatrizen $\tilde{U}$, $\tilde{S}$ und $\tilde{V}^T$ folgende Schritte umfasst:

Bilden einer Hilfsmatrix *W*,
wenn die Messvektoren in beliebiger Reihenfolge vorliegen mit den Schritten:

Berechnen von Werten $\alpha_i = \operatorname{atan2}(U_{12}U_{i1} - U_{11}U_{i2}, U_{12}U_{i2} + U_{11}U_{i1})$ für *i* = 1 bis *m*,
Berechnen der Permutation *k*(*i*), welche die $\alpha_i$ Werte der Grösse nach sortiert, so dass $\alpha_{k(i)} > \alpha_{k(i-1)}$ gilt für *i* = 2, ... ,*m*, und

Bilden der Elemente der Hilfsmatrix *W* gemäss $W_{i,k(j)} = \begin{cases} \sin(\frac{2\pi(j-1)}{m}), & i = 1 \\ \cos(\frac{2\pi(j-1)}{m}), & i = 2 \end{cases}$, für *j* = 1 bis *m*, wenn die m Positionen des Positionsgebers über annähernd den gesamten Bereich von 0 bis 2π verteilt sind,

oder $W_{i,k(j)} = \begin{cases} \sin(\frac{(\phi_{max}-\phi_{min})(j-1)}{m}), & i = 1 \\ \cos(\frac{(\phi_{max}-\phi_{min})(j-1)}{m}), & i = 2 \end{cases}$, für *j* = 1 bis *m* wenn die m Positionen des Positionsgebers lediglich einen Kreisbogen mit $\phi \in [\phi_{min}, \phi_{max}]$ abdecken,

oder $W_{i,k(j)} = \begin{cases} \sin(e \cdot \frac{(\phi_{max}-\phi_{min})(j-1)}{m}), & i = 1 \\ \cos(e \cdot \frac{(\phi_{max}-\phi_{min})(j-1)}{m}), & i = 2 \end{cases}$, für *j* = 1 bis *m*, wenn die m Positionen des Positionsgebers lediglich einen Kreisbogen mit $\phi \in [\phi_{min}, \phi_{max}]$ abdecken und der Positionsgeber einen Multipolcharakter hat, wobei der Parameter e den Multipolcharakter charakterisiert,

oder wenn die Messvektoren $\vec{q}_k$ mit *k* = 1,...,*m* aufsteigend oder absteigend entsprechend ihrer zugehörigen Position $\phi_k$ sortiert sind,
Bilden der Elemente der Hilfsmatrix *W* mit der Hilfsgrösse *f* = 1 für aufsteigende und *f* = -1 für absteigende Reihenfolge gemäss $W_{ij} = \begin{cases} \sin(f \cdot \frac{2\pi(j-1)}{m}), & i = 1 \\ \cos(f \cdot \frac{2\pi(j-1)}{m}), & i = 2 \end{cases}$, für *j* = 1 bis *m*, wenn die m Positionen des Positionsgebers annähernd über den gesamten Bereich von 0 bis 2π verteilt sind,

oder $W_{ij} = \begin{cases} \sin(f \cdot \frac{(\phi_{max}-\phi_{min})(j-1)}{m}), & i = 1 \\ \cos(f \cdot \frac{(\phi_{max}-\phi_{min})(j-1)}{m}), & i = 2 \end{cases}$, für *j* = 1 bis *m* wenn die m Positionen des Positionsgebers lediglich einen Kreisbogen mit $\phi \in [\phi_{min}, \phi_{max}]$ abdecken,

oder $W_{ij} = \begin{cases} \sin(fe \cdot \frac{(\phi_{max}-\phi_{min})(j-1)}{m}), & i = 1 \\ \cos(fe \cdot \frac{(\phi_{max}-\phi_{min})(j-1)}{m}), & i = 2 \end{cases}$, für *j* = 1 bis *m* wenn die m Positionen des Positionsgebers lediglich einen Kreisbogen mit $\phi \in [\phi_{min}, \phi_{max}]$ abdecken und der Positionsgeber einen Multipolcharakter hat, wobei der Parameter e den Multipolcharakter charakterisiert,
Bilden einer Hilfsmatrix *T* zu $T = W \tilde{U}$,
Bilden der Hilfsmatrix *H* zu $H = T \tilde{S}^{-1} \tilde{V}^T$.

**6.** Verfahren nach einem der Ansprüche 1 bis 5, bei dem $f(p_1,p_2) = \text{atan2}(p_2,p_1) - \phi_0$ ist, wobei $\phi_0$ ein Wert ist, der eine Nulllage des Positionsmesssystems charakterisiert.

**7.** Verfahren nach einem der Ansprüche 1 bis 6, **dadurch gekennzeichnet, dass** die Funktion $g(\vec{a})$ eine der folgenden Funktionen ist:

1) $g(\vec{a}) = \vec{a}$,
2) $g(\vec{a}) = \vec{a} - \vec{a}_0$,
3) $g(\vec{a}) = P \cdot \overline{a}$, oder
4) $g(\vec{a}) = P \cdot (\vec{a} - \vec{a}_0$,

wobei $\vec{a}_0$ einen Offsetvektor und $P$ eine Projektionsmatrix bezeichnet.

**8.** Verfahren nach Anspruch 7, **dadurch gekennzeichnet, dass** die Projektionsmatrix $P$ in der Kalibrierphase erfasst wird, entweder bei Abwesenheit des Positionsgebers mit den Schritten:

Durchführen von folgenden Schritten für eine vorbestimmte Anzahl von verschiedenen Fremdfeldern $v = 1$ bis $b \geq 1$, wobei die Zahl $b$ die Bedingung $b \leq r - 2$ erfüllt:

Anlegen des Fremdfeldes,
Erfassen der Sensorsignale $a_1$ bis $a_r$ und Bilden eines Signalvektors $\vec{a} = (a_1, ..., a_r)$, und
Bilden eines Fremdfeldvektors $\vec{f}_v = \vec{a}$ bzw. gegebenenfalls eines Offset kompensierten Fremdfeldvektors $\vec{f}_v = \vec{a} - \vec{a}_0$,

oder bei Anwesenheit des Positionsgebers mit den Schritten:

Bewegen des Positionsgebers in eine feste Stellung,
Erfassen der Sensorsignale $a_1$ bis $a_r$ und speichern als Vektor $\vec{a}_F$,
Durchführen von folgenden Schritten für eine vorbestimmte Anzahl von verschiedenen Fremdfeldern $v = 1$ bis $b \geq 1$, wobei die Zahl $b$ die Bedingung $b \leq r - 2$ erfüllt:

Anlegen des Fremdfeldes,
Erfassen der Sensorsignale $a_1$ bis $a_r$ und Bilden eines Signalvektors $\vec{a} = (a_1, ...,a_r)$, und
Bilden eines Fremdfeldvektors $\vec{f}_v = \vec{a} - \vec{a}_F$ bzw. gegebenenfalls eines Offset kompensierten Fremdfeldvektors $\vec{f}_v = \vec{a} - \vec{a}_F - \vec{a}_0$,

und sowohl bei Anwesenheit als auch Abwesenheit des Positionsgebers entweder mit den weiteren Schritten:

Bilden von $c$ orthonormierten Vektoren $\vec{g}_1, ..., \vec{g}_c$ des von den Fremdfeldvektoren $\vec{f}_1, ..., \vec{f}_b$, aufgespannten Vektorraums, wobei $c \leq b$,
Ergänzen der $c$ Vektoren $\vec{g}_1, ..., \overline{g}_c$ mit $n = r - c$ weiteren Vektoren $\vec{g}_{c+1}, ..., \vec{g}_{c+n}$ zu einer vollständigen, orthonormierten Basis des r-dimensionalen Vektorraums der Signalvektoren, und
Bilden der Projektionsmatrix $P$ gemäss

$$P = \begin{pmatrix} \vec{g}_{c+1} \\ \vdots \\ \vec{g}_{c+n} \end{pmatrix}.$$

oder mit den weiteren Schritten:

Bilden einer orthonormierten Basis von c Vektoren $\vec{g}_1, ..., \vec{g}_c$ des von den Fremdfeldvektoren $\vec{f}_1, ..., \vec{f}_b$ aufgespannten Vektorraums, und
Bilden der Projektionsmatrix $P$ gemäss

$$P = \mathbb{I} - \sum_{i=1}^{c} \vec{g}_i \otimes \vec{g}_i \; ,$$

wobei $\vec{g}_i \otimes \vec{g}_i$ die Tensorprodukte der Vektoren $\vec{g}_i$ sind.

**9.** Verfahren nach einem der Ansprüche 4 bis 8, **dadurch gekennzeichnet, dass** in der Kalibrierungsphase eine Matrix $C$ gebildet wird zu

$$C = \mathbb{I} - \tilde{V} \cdot \tilde{V}^{\top},$$

und dass im Normalbetrieb ein Prüfwert $v$ gebildet wird mit den Schritten

Bilden eines Vektors $\vec{d} = C\,\vec{q}$,
Berechnen eines Prüfwerts $v$ aus dem Vektor $\vec{d}$, und
Auslösen einer vorbestimmten Aktion, wenn der Prüfwert $v$ einen vorbestimmten Wert übersteigt.

**10.** Verfahren nach einem der Ansprüche 1 bis 8, weiter umfassend im laufenden Betrieb Erfassen und Zwischenspeichern einer Vielzahl von Messvektoren $\vec{q}$ und der zugehörigen, gemäss den Schritten C und D des Normalbetriebs berechneten Positionen $\phi$, und
Durchführen einer Rekalibrierung mittels den Schritten:

Auswählen einer Anzahl von zwischengespeicherten Messvektoren $\vec{q}$, deren zugehörige Positionen $\phi$ ein vorbestimmtes Kriterium erfüllen,
Neubilden der Matrix $Q$ aus den ausgewählten Messvektoren $\vec{q}$, und
Neubestimmen der Matrix $M$.

**11.** Verfahren zur Bestimmung der Position $\phi$ eines Positionsgebers eines Positionsmesssystems, wobei das Positionsmesssystem den Positionsgeber und eine Anzahl von $r$ Sensoren (4) umfasst, die je ein Sensorsignal $a_j$ mit $j$ = 1 bis $r$ abgeben, wobei das Verfahren eine Kalibrierungsphase und einen Normalbetrieb aufweist, wobei im Normalbetrieb die Position $\phi$ des Positionsgebers bestimmt wird mit den Schritten

A) Erfassen der Sensorsignale $a_1$ bis $a_r$ der Sensoren (4) und Bilden eines Signalvektors $\vec{a} = (a_1,..., a_r)$,
B) Bilden eines Messvektors $\vec{q}$ gemäss einer vorbestimmten linearen Funktion $g$ zu $\vec{q} = g(\vec{a})$, wobei der Messvektor $\vec{q}$ eine Anzahl von $n = 2$ Komponenten aufweist, wobei die Funktion $g(\vec{a})$ eine der folgenden Funktionen ist:

1) $g(\vec{a}) = P \cdot \vec{a}$, oder
2) $g(\vec{a}) = P \cdot (\vec{a} - \vec{a}_0)$,

wobei $\vec{a}_0$ einen Offsetvektor und $P$ eine Projektionsmatrix bezeichnet, und
C) Bestimmen der Position $\phi$ mittels einer vorbestimmten Funktion $f(\vec{q})$ zu $\phi = f(\vec{q})$,

und wobei in der Kalibrierungsphase die Projektionsmatrix $P$ ermittelt wird mit den Schritten:

entweder bei Abwesenheit des Positionsgebers mit den Schritten:
Durchführen von folgenden Schritten für eine vorbestimmte Anzahl von verschiedenen Fremdfeldern $v$ = 1 bis $b = r - 2$:

Anlegen des Fremdfeldes,
Erfassen der Sensorsignale $a_1$ bis $a_r$ der Sensoren (4) und Bilden eines Signalvektors $\vec{a} = (a_1, ..., a_r)$, und
Bilden eines Fremdfeldvektors $\vec{f}_v = \vec{a}$ bzw. gegebenenfalls eines Offset kompensierten Fremdfeldvektors $\vec{f}_v = \vec{a} - \vec{a}_0$,

oder bei Anwesenheit des Positionsgebers mit den Schritten:

Bewegen des Positionsgebers in eine feste Stellung,
Erfassen der Sensorsignale $a_1$ bis $a_r$ und speichern als Vektor $\vec{a}_F = (a_1, ..., a_r)$,
Durchführen von folgenden Schritten für eine vorbestimmte Anzahl von verschiedenen Fremdfeldern $v$ = 1 bis $b \geq 1$, wobei die Zahl $b$ die Bedingung $b = r - 2$ erfüllt:

Anlegen des Fremdfeldes,
Erfassen der Sensorsignale $a_1$ bis $a_r$ der Sensoren (4) und Bilden eines Signalvektors $\vec{a} = (a_1, ..., a_r)$, und
Bilden eines Fremdfeldvektors $\vec{f}_v = \vec{a} - \vec{a}_F$ bzw. gegebenenfalls eines Offset kompensierten Fremdfeldvektors $\vec{f}_v = \vec{a} - \vec{a}_F - \vec{a}_0$,

und sowohl bei Anwesenheit als auch Abwesenheit des Positionsgebers mit den weiteren Schritten:

Bilden von $c$ orthonormierten Vektoren $\vec{g}_1, ..., \vec{g}_c$ des von den Fremdfeldvektoren $\vec{f}_1, ..., \vec{f}_b$ aufgespannten Vektorraums, wobei $c = b$,
Ergänzen der $c$ Vektoren $\vec{g}_1, ..., \vec{g}_c$ mit zwei weiteren Vektoren $\vec{g}_{c+1}, \vec{g}_{c+2}$ zu einer vollständigen, orthonormierten Basis des r-dimensionalen Vektorraums der Signalvektoren, und
Bilden der Projektionsmatrix $P$ gemäss

$$P = \begin{pmatrix} \vec{g}_{c+1} \\ \vec{g}_{c+2} \end{pmatrix}.$$

## Claims

**1.** Method for determining the position $\phi$ of a position indicator of a position measuring system, wherein the position measuring system comprises the position indicator and a number of at least $r = 2$ sensors (4) each delivering a sensor signal $a_j$ with $j$ = 1 to $r$, the method having a calibration phase and a normal operation, wherein in normal operation the position $\phi$ of the position indicator is determined with the steps:

A) Detecting the sensor signals $a_1$ to $a_r$ of the sensors (4) and forming a signal vector $\vec{a} = (a_1, ..., a_r)$,
B) Forming a measurement vector $\vec{q}$ according to a predetermined linear function $g$ to $\vec{q} = g(\vec{a})$, wherein the measurement vector $\vec{q}$ has a number of $n$ components, with $2 \leq n \leq r$,
C) Calculating a vector $\vec{p} = M \cdot \vec{q}$, wherein $\vec{p}$ is a 2-component vector with the components $p_1$ and $p_2$ and $M$ is a 2 x $n$ matrix, and
D) Determining the position $\phi$ by means of a predetermined function $f(\vec{p})$ to $\phi = f(\vec{p})$,
wherein the predetermined function $f(\vec{p}) = f(p_1,p_2)$ is based on the equations $p_1 = cos(\phi)$ and $p_2 = sin(\phi)$,

and wherein the matrix $M$ is determined in a calibration phase either with the steps:

Detecting the sensor signals $a_{k1}$ to $a_{kr}$ of the sensors (4) for a predetermined number of $k$ = 1 to $m \geq 3$ positions of the position indicator (2),
Forming $m$ signal vectors $\vec{a}_k = (a_{k1},...,a_{kr})$ from the sensor signals with $k$ = 1 to $m$,
Forming $m$ measurement vectors $\vec{q}_k$ with $k$ = 1 to $m$ according to the predetermined function $g$ to $\vec{q}_k = g(\vec{a}_k)$,
Forming a matrix $Q$ according to $Q = \begin{pmatrix} \vec{q}_1 \\ \vdots \\ \vec{q}_m \end{pmatrix}$, and
Determining the matrix $M$ from the matrix $Q$ in such a way, that the transformation $\vec{p} = M \cdot \vec{q}$ is a linear mapping, which maps each of the $m$ measurement vectors $\vec{q}_k$ on a 2-component vector $\vec{p}_k$, wherein the tips of the vectors $\vec{p}_k$ substantially lie on a circle or on a circular arc,

or by means of a bootstrap-method with the steps:

Setting an index i = 0 and configuring a predetermined starting matrix $M^{(0)}$,

Detecting and storing a plurality of measurement vectors $\vec{q}$ according to the steps A and B of the normal operation, repeatedly executing the following steps:

setting the matrix $M$ to $M = M^{(i)}$
increasing the index $i$ by 1,
calculating the positions $\phi$ of the stored measurement vectors $\vec{q}$ according to the steps C and D of the normal operation,
selecting a number of k = 1 to $m$ of the stored measurement vectors $\vec{q}_k$, the corresponding positions $\phi_k$ of which fulfill a predetermined criterion,
forming a matrix $Q$ according to
$$Q = \begin{pmatrix} \vec{q}_1 \\ \vdots \\ \vec{q}_m \end{pmatrix},$$
determining a new matrix $M^{(i)}$ from the matrix $Q$ in such a way, that the transformation $\vec{p} = M \cdot \vec{q}$ is a linear mapping, which maps each of the $m$ selected measurement vectors $\vec{q}_k$ on a 2-component vector $\vec{p}_k$,

until the matrix $M^{(i)}$ within a predetermined tolerance no longer differs from the matrix $M^{(i-1)}$, whereby the tips of the vectors $\vec{p}_k$, with increasing index i substantially come to lie on a circle or on a circular arc.

**2.** Method according to claim 1, **characterized in that** the position measuring system comprises at least r = 3 sensors.

**3.** Method according to claim 1 or 2, **characterized in that** the determining of the matrix $M$ comprises the following steps:

Determining two matrices $U$ and $B$, which fulfill the equation $Q = U \cdot B$, wherein $U$ is a $m$ x 2 matrix with $U^T \cdot U$ = II, and $B$ is a symmetrical, positive definite 2 x 2 matrix, by

forming an auxiliary matrix $D$ to $D = Q^T \cdot Q$,
calculating the matrix $B$ according to $B = D^{1/2}$,

forming an auxiliary matrix $H$ to $H = B^{-1}$,

forming the matrix $M$ to $M = N\ H$, wherein $N = \begin{pmatrix} d & 0 \\ 0 & 1 \end{pmatrix}$ is an auxiliary matrix, whose parameter d has the value 1 or -1.

**4.** Method according to claim 1 or 2, **characterized in that** the determining of the matrix $M$ comprises the following steps:

determining three matrices $U$, $S$ and $V^T$, which fulfill the equation $Q = U \cdot S \cdot V^T$, wherein $U$ is an orthogonal $m$ x $m$ matrix, $V^T$ is in orthogonal $n$ x $n$ matrix and $S$ is a positiv semidefinite $m$ x $n$ diagonal matrix, the diagonal elements of which are sorted according to decreasing size,
Forming sub- matrices $\tilde{U}$, $\tilde{S}$ and $\tilde{V}^T$ in dependence of a predetermined parameter $h$, which fulfills the condition $2 \leq h \leq l$, wherein $l \leq min(m,n)$ designate the number of diagonal elements of $S$ which are different from zero and wherein

$\tilde{U}$ is that $m$ x $h$ sub-matrix of the matrix $U$, which is formed by discarding the columns $h$ + 1 to $m$,
$\tilde{S}$ is that $h$ x $h$ sub-matrix of the matrix $S$, which is formed by discarding the rows $h$ + 1 to $m$ and discarding the columns $h$ + 1 to $n$, and
$\tilde{V}^T$ is that $h$ x $n$ sub- matrix of the matrix $V^T$, which is formed by discarding the rows $h$ + 1 to $n$.

if $n \geq 2$ forming an auxiliary matrix $H$ from the elements of the sub- matrices $\tilde{U}$, $\tilde{S}$ and $\tilde{V}^T$, or in the special case of $n$ = 2 alternatively forming the auxiliary matrix $H$ to $H = \tilde{S}^{-1}\ \tilde{V}^T$, and

forming the matrix $M$ zu $M = N\ H$, wherein $N = \begin{pmatrix} d & 0 \\ 0 & 1 \end{pmatrix}$ is an auxiliary matrix, whose parameter d has the value 1 or -1.

**5.** Method according to claim 4, **characterized in that** the forming of the auxiliary matrix $H$ from elements of the sub-

matrices $\tilde{U}$, $\tilde{S}$ and $\tilde{V}^T$ comprises the following steps:

forming an auxiliary matrix $W$,
if the measurement vectors are present in an arbitrary order with the steps:

calculating values $\alpha_i$ = atan2($U_{12}U_{i1}$ - $U_{11}U_{i2}$, $U_{12}U_{i2}$ + $U_{11}U_{i1}$) for $i$ = 1 to $m$,
calculating the permutation $k(i)$, which sorts the $\alpha_i$-values according to their size, so that $\alpha_{k(i)} > \alpha_{k(i-1)}$ for $i$ = 2,...,$m$, and
forming the elements of the auxiliary matrix $W$ according to $W_{i,k(j)} = \begin{cases} \sin(\frac{2\pi(j-1)}{m}), & i=1 \\ \cos(\frac{2\pi(j-1)}{m}), & i=2 \end{cases}$, for $j$ = 1 to $m$, if the m positions of the position indicator are distributed over approximately the entire range from 0 to 2π,
or $W_{i,k(j)} = \begin{cases} \sin(\frac{(\phi_{max}-\phi_{min})(j-1)}{m}), & i=1 \\ \cos(\frac{(\phi_{max}-\phi_{min})(j-1)}{m}), & i=2 \end{cases}$, for $j$ = 1 to $m$ if the m positions of the position indicator occupy only a circular arc with $\phi \in [\phi_{min},\phi_{max}]$,
or $W_{i,k(j)} = \begin{cases} \sin(e \cdot \frac{(\phi_{max}-\phi_{min})(j-1)}{m}), & i=1 \\ \cos(e \cdot \frac{(\phi_{max}-\phi_{min})(j-1)}{m}), & i=2 \end{cases}$, for $j$ = 1 to $m$, if the m positions of the position indicator occupy only a circular arc with $\phi \in [\phi_{min},\phi_{max}]$ and the position indicator has a multipole character, wherein the parameter e characterizes the multipole character,

or if the measurement vectors $\vec{q}_k$ with $k$ = 1, ... ,$m$ are sorted in ascending or descending order according to their corresponding position $\phi_k$,
forming the elements of the auxiliary matrix $W$ with the auxiliary quantity $f$ = 1 for ascending and $f$ = -1 for descending order according to $W_{ij} = \begin{cases} \sin(f \cdot \frac{2\pi(j-1)}{m}), & i=1 \\ \cos(f \cdot \frac{2\pi(j-1)}{m}), & i=2 \end{cases}$, for $j$ = 1 to $m$ if the m positions of the position indicator are distributed over approximately the entire range from 0 to 2π,
or $W_{ij} = \begin{cases} \sin(f \cdot \frac{(\phi_{max}-\phi_{min})(j-1)}{m}), & i=1 \\ \cos(f \cdot \frac{(\phi_{max}-\phi_{min})(j-1)}{m}), & i=2 \end{cases}$, for $j$ = 1 to $m$ if the m positions of the position indicator occupy only a circular arc with $\phi \in [\phi_{min},\phi_{max}]$,
or $W_{ij} = \begin{cases} \sin(fe \cdot \frac{(\phi_{max}-\phi_{min})(j-1)}{m}), & i=1 \\ \cos(fe \cdot \frac{(\phi_{max}-\phi_{min})(j-1)}{m}), & i=2 \end{cases}$, for $j$ = 1 to $m$ if the m positions of the position indicator occupy only a circular arc with $\phi \in [\phi_{min},\phi_{max}]$ and the position indicator has a multipole character, wherein the parameter e characterizes the multipole character,
forming an auxiliary matrix $T$ to $T = W\tilde{U}$,
forming the auxiliary matrix $H$ to $H = T\tilde{S}^{-1}\tilde{V}^T$.

**6.** Method according to any of claims 1 to 5, wherein
$f(p_1,p_2)$ = atan2($p_2$,$p_1$) - $\phi_0$, wherein $\phi_0$ is a quantity which characterizes a zero position of the position measuring system.

**7.** Method according to any of claims 1 to 6, **characterized in that** the function $g(\vec{a})$ is one of the following functions:

1) $g(\vec{a}) = \vec{a}$,
2) $g(\vec{a}) = \vec{a} - \vec{a}_0$,
3) $g(\vec{a}) = P \cdot \vec{a}$, or
4) $g(\vec{a}) = P \cdot (\vec{a} - \vec{a}_0)$,

wherein $\vec{a}_0$ designates an offset vector and $P$ a projection matrix.

8. Method according to claim 7, **characterized in that** the projection matrix $P$ is determined in the calibration phase, either in absence of the position indicator with the steps:

executing the following steps for a predetermined number of different external fields $v = 1$ to $b \geq 1$, wherein the number $b$ fulfills the condition $b \leq r - 2$:

applying the external field,
detecting the sensor signals $a_1$ to $a_r$ and forming a signal vector $\vec{a} = (a_1, \ldots, a_r)$, and
forming an external field vector $\vec{f}_v = \vec{a}$ or, given the case, of an offset compensated external field vector $\vec{f}_v = \vec{a} - \vec{a}_0$,

or in presence of the position indicator with the steps:

moving the position indicator in a fixed position,
detecting the sensor signals $a_1$ to $a_r$ and storing as vector $\vec{a}_F = (a_1, \ldots, a_r)$,
executing the following steps for a predetermined number of different external fields $v = 1$ to $b \geq 1$, wherein the number $b$ fulfills the condition $b \leq r - 2$:

applying the external field,
detecting the sensor signals $a_1$ to $a_r$ and forming a signal vector $\vec{a} = (a_1, \ldots, a_r)$, and
forming an external field vector $\vec{f}_v = \vec{a} - \vec{a}_F$ or, given the case, of an offset compensated external field vector $\vec{f}_v = \vec{a} - \vec{a}_F - \vec{a}_0$,

and both in the presence and absence of the position indicator either with the further steps:

forming of c orthonormal vectors $\vec{g}_1, \ldots, \vec{g}_c$ of the vector space spanned by the external field vectors $\vec{f}_1, \ldots, \vec{f}_b$, wherein $c \leq b$,
complementing the $c$ vectors $\vec{g}_1, \ldots, \vec{g}_c$ with $n = r - c$ further vectors $\vec{g}_{c+1}, \ldots, \vec{g}_{c+n}$ to a complete, orthonormal basis of the $r$-dimensional vector space of the signal vectors, and
forming the projection matrix $P$ according to

$$P = \begin{pmatrix} \vec{g}_{c+1} \\ \vdots \\ \vec{g}_{c+n} \end{pmatrix}.$$

or with the further steps:

forming an orthonormal basis of $c$ vectors $\vec{g}_1, \ldots, \vec{g}_c$ of the vector space spanned by the external field vectors $\vec{f}_1, \ldots, \vec{f}_b$, and
forming the projection matrix $P$ according to

$$P = \mathbb{I} - \sum_{i=1}^{c} \vec{g}_i \otimes \vec{g}_i \,,$$

wherein $\vec{g}_i \otimes \vec{g}_i$ are the tensor products of the vectors $\vec{g}_i$.

9. Method according to any of claims 4 to 8, **characterized in that** a matrix $C$ is formed in the calibration phase as

$$C = \mathbb{I} - \tilde{V} \cdot \tilde{V}^\top,$$

and wherein in normal operation a check value $v$ is formed with the steps

forming a vector $\vec{d} = C\,\vec{q}$,
calculating the check value $v$ from the vector $\vec{d}$, and
triggering a predetermined action, if the check value $v$ exceeds a predetermined value.

**10.** Method according to any of claims 1 to 8, further comprising
in running operation capturing and buffering a plurality of measurement vectors $\vec{q}$ and of the corresponding positions $\phi$ which have been calculated according to the steps C and D of the normal operation, and
performing a recalibration by means of the steps:

selecting a number of buffered measurement vectors $\vec{q}$, the corresponding positions $\phi$ of which fulfill a predetermined criterion,
rebuilding the matrix $Q$ from the selected measurement vectors $\vec{q}$, and
rebuilding the matrix $M$.

**11.** Method for determining the position $\phi$ of a position indicator of a position measuring system, wherein the position measuring system comprises the position indicator and a number of $r$ sensors (4) each delivering a sensor signal $a_j$ with $j$ = 1 to $r$, the method having a calibration phase and a normal operation, wherein in normal operation the position $\phi$ of the position indicator is determined with the steps

A) detecting the sensor signals $a_1$ to $a_r$ of the sensors (4) and forming a signal vector $\vec{a} = (a_1, ..., a_r)$,
B) forming a measurement vector $\vec{q}$ according to a predetermined linear function $g$ to $\vec{q} = g(\vec{a})$, wherein the measurement vector $\vec{q}$ has a number of $n$ = 2 components, wherein the function $g(\vec{a})$ is one of the following functions:

1) $g(\vec{a}) = P \cdot \vec{a}$, or
2) $g(\vec{a}) = P \cdot (\vec{a} - \vec{a}_0)$,

wherein $\vec{a}_0$ designates an offset vector and $P$ a projection matrix, and
C) determining the position $\phi$ by means of a predetermined function $f(\vec{q})$ to $\phi = f(\vec{q})$,

and wherein in the calibration phase the projection matrix $P$ is determined with the steps:

either in absence of the position indicator with the steps:
executing the following steps for a predetermined number of different external fields $v$ = 1 to $b = r - 2$:

applying the external field,
detecting the sensor signals $a_1$ to $a_r$ and forming a signal vector $\vec{a} = (a_1, ... ,a_r)$, and
forming an external field vector $\vec{f}_v = \vec{a}$ or, given the case, of an offset compensated external field vector $\vec{f}_v = \vec{a} - \vec{a}_0$,

or in presence of the position indicator with the steps:

moving the position indicator in a fixed position,
detecting the sensor signals $a_1$ to $a_r$ and storing as vector $\vec{a}_F = (a_1, ..., a_r)$,
executing the following steps for a predetermined number of different external fields $v$ = 1 to $b \geq 1$, wherein the number $b$ fulfills the condition $b = r - 2$:

applying the external field,
detecting the sensor signals $a_1$ to $a_r$ of the sensors (4) and forming a signal vector $\vec{a} = (a_1, ..., a_r)$, and
forming an external field vector $\vec{f}_v = \vec{a} - \vec{a}_F$ or, given the case, of an offset compensated external field vector $\vec{f}_v = \vec{a} - \vec{a}_F - \vec{a}_0$,

and both in the presence and absence of the position indicator with the further steps:

forming of $c$ orthonormal vectors $\vec{g}_1, ..., \vec{g}_c$ of the vector space spanned by the external field vectors $\vec{f}_1, ...,$B $\vec{f}_b$, wherein $c = b$,
complementing the $c$ vectors $\vec{g}_1, ..., \vec{g}_c$ with two further vectors $\vec{g}_{c+1}, \vec{g}_{c+2}$ to a complete, orthonormal basis of the $r$-dimensional vector space of the signal vectors, and
forming the projection matrix $P$ according to

$$P = \begin{pmatrix} \vec{g}_{c+1} \\ \vec{g}_{c+2} \end{pmatrix}.$$

## Revendications

**1.** Procédé pour la détermination de la position $\phi$ d'un transmetteur de position d'un système de mesure de la position, lequel système de mesure de la position comprenant le transmetteur de position et un certain nombre d'au moins $r = 2$ capteurs (4) émettant chacun un signal de capteur $a_j$ où $j = 1$ à $r$, le procédé comprenant une phase d'étalonnage et un fonctionnement normal, la position $\phi$ du transmetteur de position étant déterminée pendant le fonctionnement normal selon les étapes suivantes :

A) acquisition des signaux de capteur $a_1$ à $a_r$ des capteurs (4) et formation d'un vecteur de signal $\vec{a} = (a_1, ..., a_r)$,
B) formation d'un vecteur de mesure $\vec{q}$ selon une fonction linéaire prédéterminée $g$ pour $\vec{q} = g(\vec{a})$, le vecteur de mesure $\vec{q}$ ayant un certain nombre $n$ de composantes, où $2 \leq n \leq r$,
C) calcul d'un vecteur $\vec{p} = M \cdot \vec{q}$, où $\vec{p}$ est un vecteur à deux composantes comprenant les composantes $p_1$ et $p_2$ et $M$ est une matrice de 2 x $n$, et
D) détermination de la position $\phi$ au moyen d'une fonction prédéterminée $f(\vec{p})$ pour $\phi = f(\vec{p})$, laquelle fonction prédéterminée $f(\vec{p}) = f(p_1,p_2)$ étant basée sur les équations $p_1 = cos(\phi)$ et $p_2 = sin(\phi)$,

et la matrice $M$ étant déterminée, dans la phase d'étalonnage, soit selon les étapes suivantes :

acquisition des signaux de capteur $a_{k1}$ à $a_{kr}$ des capteurs (4) pour un nombre prédéterminé $k = 1$ à $m \geq 3$ de positions du transmetteur de position (2),
formation, à partir des signaux des capteurs, de $m$ vecteurs de signal $\vec{a}_k = (a_{k1}, ..., a_{kr})$ où $k = 1$ à $m$,
formation de $m$, vecteurs de mesure $\vec{q}_k$ où $k = 1$ à $m$ selon la fonction prédéterminée $g$ pour $\vec{q}_k = g(\vec{a}_k)$,
formation d'une matrice $Q$ selon $Q = \begin{pmatrix} \vec{q}_1 \\ \vdots \\ \vec{q}_m \end{pmatrix}$, et
détermination de la matrice $M$ à partir de la matrice $Q$ de telle sorte que la transformation $\vec{p} = M \cdot \vec{q}$ constitue une application linéaire qui projette chacun des $m$ vecteurs de mesure $\vec{q}_k$ sur un vecteur $\vec{p}_k$ à deux composantes, les pics des vecteurs $\vec{p}_k$ se trouvant essentiellement sur un cercle (6) ou un arc de cercle,

soit au moyen d'une procédure d'autoamorçage selon les étapes suivantes :

définition d'un indice i = 0 et d'une matrice de début prédéterminée $M^{(0)}$,
acquisition et stockage d'un grand nombre de vecteurs de mesure $\vec{q}$ selon les étapes A et B du fonctionnement normal,
exécution répétée des étapes suivantes :

définition de la matrice $M$ comme $M = M^{(i)}$,
incrémentation de l'indice $i$ de 1,
calcul des positions $\phi$ des vecteurs de mesure $\vec{q}$ stockés selon ls étapes C et D du fonctionnement normal,
choix d'un nombre k = 1 à $m$ de vecteurs de mesure stockés $\vec{q}_k$ dont les positions $\phi_k$ satisfont un critère prédéterminé,

formation d'une matrice Q selon $$Q = \begin{pmatrix} \vec{q}_1 \\ \vdots \\ \vec{q}_m \end{pmatrix},$$

détermination d'une nouvelle matrice $M^{(i)}$ à partir de la matrice $Q$ de telle sorte que la transformation $\vec{p} = M \cdot \vec{q}$ soit une application linéaire qui projette chacun des $m$ vecteurs de mesure $\vec{q}_k$ choisis sur un vecteur $\vec{p}_k$ à deux composantes,

jusqu'à ce que $M^{(i)}$ ne diffère plus, dans une limite de tolérance prédéfinie, de la matrice $M^{(i-1)}$, les pics des vecteurs $\vec{p}_k$ se rapprochant pour l'essentiel d'un cercle (6) ou d'un arc de cercle avec l'augmentation de l'indice *i*.

2. Procédé selon la revendication 1, **caractérisé en ce que** le système de mesure de la position comprend au moins trois capteurs.

3. Procédé selon la revendication 1 ou 2, **caractérisé en ce que la** détermination de la matrice $M$ comprend les étapes suivantes :

détermination de deux matrices $U$ et $B$ satisfaisant l'équation $Q = U \cdot B$, où $U$ est une matrice de $m$ x 2 avec

$$U^\top \cdot U = \mathbb{I}$$

et $B$ est une matrice symétrique 2 x 2 définie positive, par

formation d'une matrice auxiliaire $D$ selon $D = Q^\top \cdot Q$,
calcul de la matrice $B$ selon $B = D^{1/2}$,

formation d'une matrice auxiliaire $H$ selon $H = B^{-1}$,

formation de la matrice $M$ selon $M = N\,H$, où $N = \begin{pmatrix} d & 0 \\ 0 & 1 \end{pmatrix}$ est une matrice auxiliaire dont le paramètre $d$ a la valeur 1 ou -1.

4. Procédé selon la revendication 1 ou 2, **caractérisé en ce que** la détermination de la matrice $M$ comprend les étapes suivantes :

détermination de trois matrices $U$, $S$ et $V^\top$ satisfaisant l'équation $Q = U \cdot S \cdot V^\top$, où $U$ est une matrice orthogonale de $m$ x $m$, $V^\top$ est une matrice orthogonale de $n$ x $n$ et $S$ est une matrice diagonale de $m$ x $n$ semi-définie positive dont les éléments diagonaux sont rangés par ordre décroissant de grandeur,
formation de sous-matrices $\tilde{U}$, $\tilde{S}$ et $\tilde{V}^\top$ en fonction d'un paramètre prédéfini $h$ satisfaisant la condition $2 \leq h \leq l$, où $l \leq min(m,n)$ représente le nombre d'éléments diagonaux de $S$ différents de zéro et où

$\tilde{U}$ est la sous-matrice de $m$ x $h$ de la matrice $U$ qui est formée par la suppression des colonnes $h$ + 1 à $m$, et
$\tilde{S}$ est la sous-matrice de $h$ x $h$ de la matrice $S$ qui est formée par la suppression des lignes $h$ + 1 à $m$, et la suppression des colonnes $h$ + 1 à $n$, et
$\tilde{V}^\top$ est la sous-matrice de $h$ x $n$ de la matrice $V^\top$ qui est formée par la suppression des lignes $h$ + 1 à $n$,

si $n \geq 2$, formation d'une matrice auxiliaire $H$ à partir d'éléments des sous-matrices $\tilde{U}$, $\tilde{S}$ et $\tilde{V}^\top$ ou, dans le cas particulier où $n = 2$, formation possible également de la matrice auxiliaire $H$ selon $H = \tilde{S}^{-1}\,\tilde{V}^\top$, et

formation de la matrice $M$ selon $M = N\,H$, où $N = \begin{pmatrix} d & 0 \\ 0 & 1 \end{pmatrix}$ est une matrice auxiliaire dont le paramètre $d$ a la valeur 1 ou -1.

5. Procédé selon la revendication 4, **caractérisé en ce que** la formation de la matrice auxiliaire $H$ à partir d'éléments des sous-matrices $\tilde{U}$, $\tilde{S}$ et $\tilde{V}^\top$ comprend les étapes suivantes :

formation d'une matrice auxiliaire $W$,
quand les vecteurs de mesure sont présents dans un ordre quelconque, selon les étapes suivantes :

calcul de valeurs $\alpha_i$ = atan2($U_{12}U_{i1}$ - $U_{11}U_{i2}$, $U_{12}U_{i2}$ + $U_{11}U_{i1}$) pour $i$ = 1 à $m$, calcul de la permutation $k(i)$ qui trie les valeurs $\alpha_i$ par grandeur de façon à avoir $\alpha_{k(i)} > \alpha_{k(i-1)}$ pour $i$ = 2,..., $m$, et formation des éléments de la matrice auxiliaire $W$ selon $$W_{i,k(j)} = \begin{cases} \sin(\frac{2\pi(j-1)}{m}), & i=1 \\ \cos(\frac{2\pi(j-1)}{m}), & i=2 \end{cases},$$ pour $j$ = 1 à $m$, si les $m$ positions du transmetteur de position sont réparties sur à peu près toute la plage de 0 à $2\pi$,

ou $$W_{i,k(j)} = \begin{cases} \sin(\frac{(\phi_{max}-\phi_{min})(j-1)}{m}), & i=1 \\ \cos(\frac{(\phi_{max}-\phi_{min})(j-1)}{m}), & i=2 \end{cases},$$ pour $j$ = 1 à $m$ si les $m$ positions du transmetteur de position couvrent seulement un arc de cercle de $\phi \in [\phi_{min}, \phi_{max}]$

ou $$W_{i,k(j)} = \begin{cases} \sin(e \cdot \frac{(\phi_{max}-\phi_{min})(j-1)}{m}), & i=1 \\ \cos(e \cdot \frac{(\phi_{max}-\phi_{min})(j-1)}{m}), & i=2 \end{cases},$$ pour $j$ = 1 à $m$, si les $m$ positions du transmetteur de position couvrent seulement un arc de cercle de $\phi \in [\phi_{min}, \phi_{max}]$ et si le transmetteur de position a un caractère multipolaire, le paramètre e caractérisant le caractère multipolaire,

ou, quand les vecteurs de mesure $\vec{q}_k$, où $k$ = 1, ..., $m$ sont triés par ordre croissant ou décroissant selon leur position $\phi_k$ respective,
formation des éléments de la matrice auxiliaire $W$ avec la grandeur auxiliaire $f$ = 1 pour l'ordre croissant et $f$ = -1 pour l'ordre décroissant selon $$W_{ij} = \begin{cases} \sin(f \cdot \frac{2\pi(j-1)}{m}), & i=1 \\ \cos(f \cdot \frac{2\pi(j-1)}{m}), & i=2 \end{cases},$$ pour $j$ = 1 à $m$, si les $m$ positions du transmetteur de position sont réparties sur à peu près toute la plage de 0 à 2π,

ou $$W_{ij} = \begin{cases} \sin(f \cdot \frac{(\phi_{max}-\phi_{min})(j-1)}{m}), & i=1 \\ \cos(f \cdot \frac{(\phi_{max}-\phi_{min})(j-1)}{m}), & i=2 \end{cases},$$ pour $j$ = 1 à $m$ si les $m$ positions du transmetteur de position couvrent seulement un arc de cercle de $\phi \in [\phi_{min}, \phi_{max}]$,

ou $$W_{ij} = \begin{cases} \sin(fe \cdot \frac{(\phi_{max}-\phi_{min})(j-1)}{m}), & i=1 \\ \cos(fe \cdot \frac{(\phi_{max}-\phi_{min})(j-1)}{m}), & i=2 \end{cases},$$ pour $j$ = 1 à $m$, si les $m$ positions du transmetteur de position couvrent seulement un arc de cercle de $\phi \in [\phi_{min}, \phi_{max}]$ et si le transmetteur de position a un caractère multipolaire, le paramètre e caractérisant le caractère multipolaire,
formation d'une matrice auxiliaire $T$ pour $T = W\tilde{U}$,
formation de la matrice auxiliaire $H$ pour $H = T\tilde{S}^{-1}\tilde{V}^T$.

**6.** Procédé selon l'une des revendications 1 à 5, dans lequel on a $f(p_1,p_2)$ = atan2($p_2$,$p_1$) - $\phi_0$, où $\phi_0$ est une valeur qui caractérise une position à zéro du système de mesure de la position.

**7.** Procédé selon l'une des revendications 1 à 6, **caractérisé en ce que** la fonction $g(\vec{a})$ est l'une des fonctions suivantes :

1) $g(\vec{a}) = \vec{a}$,
2) $g(\vec{a}) = \vec{a} - \vec{a}_0$,
3) $g(\vec{a}) = P \cdot \vec{a}$, ou
4) $g(\vec{a}) = P \cdot (\vec{a} - \vec{a}_0)$,

où $\vec{a}_0$ désigne un vecteur de décalage et $P$ une matrice de projection.

**8.** Procédé selon la revendication 7, **caractérisé en ce que** la matrice de projection $P$ est acquise dans la phase d'étalonnage soit, en l'absence du transmetteur de position, selon les étapes suivantes :

exécution des étapes suivantes pour un nombre prédéterminé de champs étrangers différents $v = 1$ jusqu'à $b \geq 1$, où le nombre $b$ remplit la condition $b \leq r - 2$ :

création du champ étranger,
acquisition des signaux de capteur $a_1$ à $a_r$ et formation d'un vecteur de signal $\vec{a} = (a_1, ..., a_r)$, et
formation d'un vecteur de champ étranger $\vec{f}_v = \vec{a}$ et le cas échéant d'un vecteur de champ étranger à décalage compensé $\vec{f}_v = \vec{a} - \vec{a}_0$,

soit, en présence du transmetteur de position, selon les étapes suivantes :

déplacement du transmetteur de position dans une position fixe,
acquisition des signaux de capteur $a_1$ à $a_r$ et enregistrement sous forme de vecteur $\vec{a}_F$,
exécution des étapes suivantes pour un nombre prédéterminé de champs étrangers différents $v = 1$ jusqu'à $b \geq 1$, où le nombre $b$ remplit la condition $b \leq r - 2$ :

création du champ étranger,
acquisition des signaux de capteur $a_1$ à $a_r$ et formation d'un vecteur de signal $\vec{a} = (a_1, ..., a_r)$, et
formation d'un vecteur de champ étranger $\vec{f}_v = \vec{a}$ et le cas échéant d'un vecteur de champ étranger à décalage compensé $\vec{f}_v = \vec{a} - \vec{a}_0$,

et, aussi bien en l'absence qu'en la présence du transmetteur de position, soit selon les étapes supplémentaires suivantes :

formation de $c$ vecteurs orthonormés $\vec{g}_1, ..., \vec{g}_c$ de l'espace vectoriel couvert par les vecteurs de champ étranger $\vec{f}_1, ..., \vec{f}_b$, où $c \leq b$,
ajout aux $c$ vecteurs $\vec{g}_1, ..., \vec{g}_c$ de $n = r - c$ autres vecteurs $\vec{g}_{c+1}, ..., \vec{g}_{c+n}$ pour obtenir une base orthonormée complète de l'espace vectoriel à $r$ dimensions des vecteurs de signal et
formation de la matrice de projection $P$ selon

$$P = \begin{pmatrix} \vec{g}_{c+1} \\ \vdots \\ \vec{g}_{c+n} \end{pmatrix},$$

soit selon les étapes supplémentaires suivantes :

formation d'une base orthonormée de $c$ vecteurs $\vec{g}_1, ..., \vec{g}_c$ de l'espace vectoriel couvert par les vecteurs de champ étranger $\vec{f}_1, ..., \vec{f}_b$ et
formation de la matrice de projection $P$ selon

$$C = \mathbb{I} - \tilde{V} \cdot \tilde{V}^{\top},$$

où $\vec{g}_i \otimes \vec{g}_i$ sont les produits tensoriels des vecteurs $\vec{g}_i$.

**9.** Procédé selon l'une des revendications 4 à 8, **caractérisé en ce que** dans la phase d'étalonnage, une matrice $C$ est formée selon

$$C = \mathbb{I} - \tilde{V} \cdot \tilde{V}^{\top},$$

et **en ce qu'**en fonctionnement normal, une valeur d'essai $v$ est formée suivant les étapes de

formation d'un vecteur $\vec{d} = C\,\vec{q}$,
calcul d'une valeur d'essai $v$ à partir du vecteur $\vec{d}$, et

déclenchement d'une action prédéterminée si la valeur d'essai $v$ dépasse une valeur prédéterminée.

**10.** Procédé selon l'une des revendications 1 à 8, comprenant en outre, pendant le fonctionnement, l'acquisition et le stockage d'un grand nombre de vecteurs de mesure $\vec{q}$ et des positions $\phi$ correspondantes calculées pendant les étapes C et D du fonctionnement normal, et
l'exécution d'un réétalonnage au moyen des étapes de

sélection d'un certain nombre de vecteurs de mesure $\vec{q}$ stockés dont les positions $\phi$ respectives satisfont un critère prédéterminé,
formation d'une nouvelle matrice $Q$ à partir des vecteurs de mesure $\vec{q}$ sélectionnées, et
nouvelle définition de la matrice $M$.

**11.** Procédé pour la détermination de la position $\phi$ d'un transmetteur de position d'un système de mesure de la position, lequel système de mesure de la position comprenant le transmetteur de position et un nombre de $r$ capteurs (4) qui émettent chacun un signal de capteur $a_j$ où $j$ = 1 à $r$, lequel procédé comprenant une phase d'étalonnage et un fonctionnement normal, la position $\phi$ du transmetteur de position étant déterminée pendant le fonctionnement normal selon les étapes suivantes :

A) acquisition des signaux de capteur $a_1$ à $a_r$ des capteurs (4) et formation d'un vecteur de signal $\vec{a} = (a_1, ..., a_r)$,
B) formation d'un vecteur de mesure $\vec{q}$ selon une fonction linéaire prédéterminée $g$ pour $\vec{q} = g(\vec{a})$, le vecteur de mesure $\vec{q}$ ayant un nombre de $n$ = 2 composantes, la fonction $g(\vec{a})$ étant l'une des fonctions suivantes :

1) $g(\vec{a}) = P \cdot \vec{a}$ ou
2) $g(\vec{a}) = P \cdot (\vec{a} - \vec{a}_0)$,

où $\vec{a}_0$ désigne un vecteur de décalage et $P$ une matrice de projection, et
C) détermination de la position $\phi$ au moyen d'une fonction prédéterminée $f(\vec{q})$ pour $\phi = f(\vec{q})$,

et la matrice de projection $P$ étant déterminée pendant la phase d'étalonnage selon les étapes suivantes :

soit, en l'absence du transmetteur de position, selon les étapes suivantes :
exécution des étapes suivantes pour un nombre prédéterminée de champs étrangers différents $v$ = 1 jusqu'à $b = r - 2$ :

création du champ étranger,
acquisition des signaux de capteur $a_1$ à $a_r$ des capteurs (4) et formation d'un vecteur de signal $\vec{a} = (a_1, ..., a_r)$, et
formation d'un vecteur de champ étranger $\vec{f}_v = \vec{a}$ ou, le cas échéant, d'un vecteur de champ étranger à décalage compensé $\vec{f}_v = \vec{a} - \vec{a}_0$,

soit, en présence du transmetteur de position, selon les étapes de :

déplacement du transmetteur de position dans une position fixe,
acquisition des signaux de capteur $a_1$ à $a_r$ et enregistrement sous forme de vecteur $\vec{a}_F = (a_1, ..., a_r)$,
exécution des étapes suivantes pour un nombre prédéterminé de champs étrangers différents $v$ = 1 jusqu'à $b \geq 1$, où le nombre $b$ satisfait la condition $b = r - 2$ :

création du champ étranger,
acquisition des signaux de capteur $a_1$ à $a_r$ des capteurs (4) et formation d'un vecteur de signal $\vec{a} = (a_1, ..., a_r)$, et
formation d'un vecteur de champ étranger $\vec{f}_v = \vec{a} - \vec{a}_F$ ou, le cas échéant, d'un vecteur de champ étranger à décalage compensé $\vec{f}_v = \vec{a} - \vec{a}_F - \vec{a}_0$,

et, aussi bien en l'absence qu'en la présence du transmetteur de position, selon les étapes supplémentaires suivantes :

formation de $c$ vecteurs orthonormés $\vec{g}_1, ..., \vec{g}_c$ de l'espace vectoriel couvert par les vecteurs de champ étranger $\vec{f}_1, ..., \vec{f}_b$, où $c = b$,
ajout aux $c$ vecteurs $\vec{g}_1, ..., \vec{g}_c$ de deux autres vecteurs $\vec{g}_{c+1}, \vec{g}_{c+2}$ pour obtenir une base orthonormée complète de l'espace vectoriel à $r$ dimensions des vecteurs de signal et formation de la matrice de projection $P$ selon

$$P = \begin{pmatrix} \vec{g}_{c+1} \\ \vec{g}_{c+2} \end{pmatrix}.$$

Fig. 1

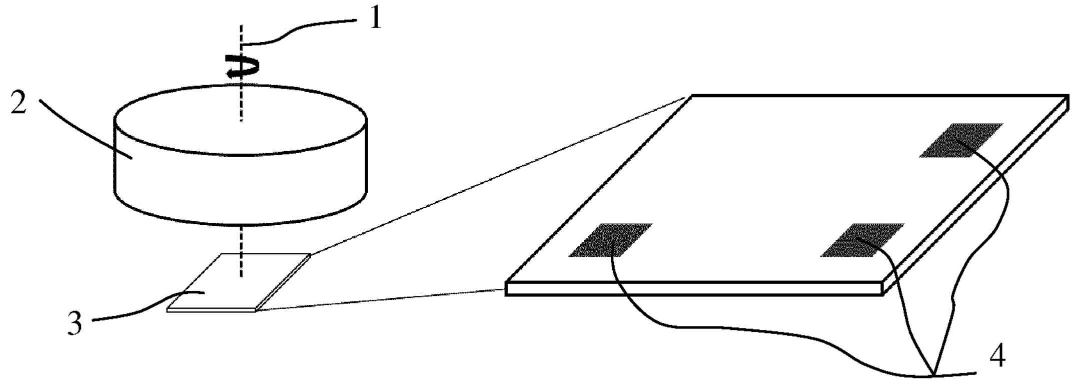


Fig. 2

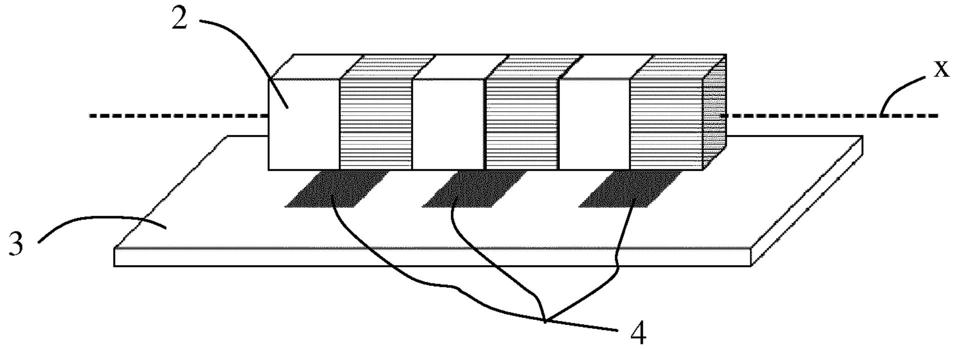


Fig. 3

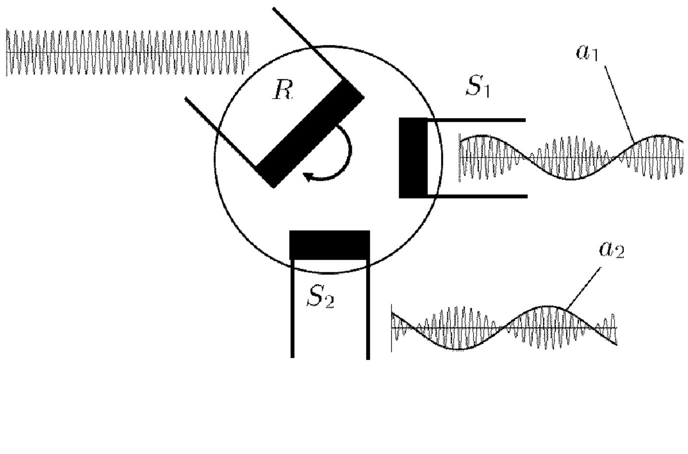

Fig. 4

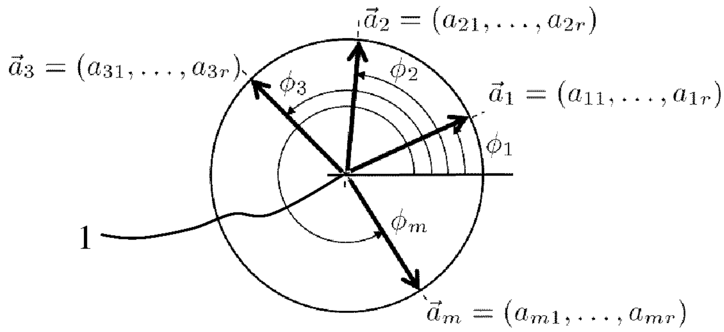


Fig. 5

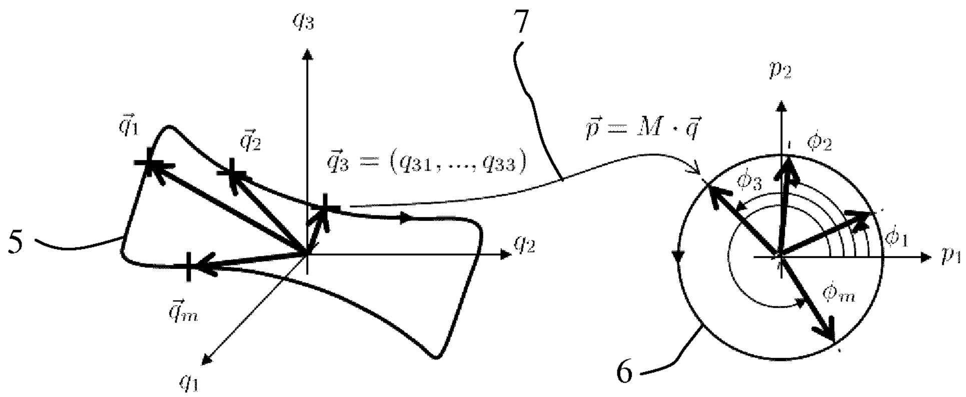


Fig. 6

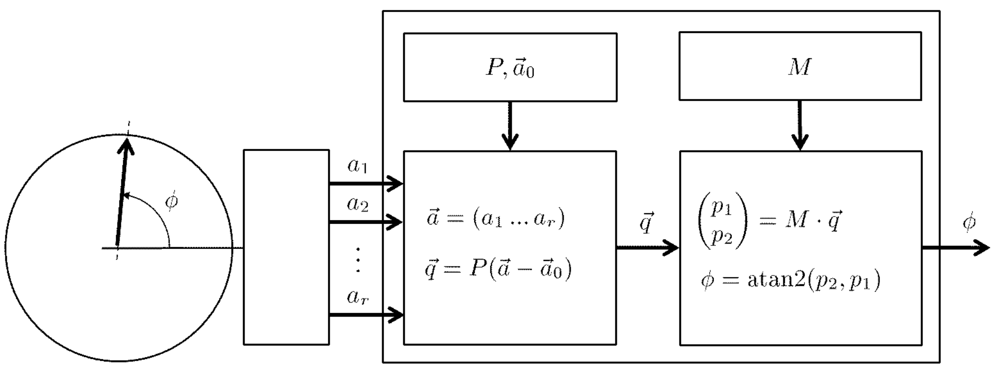

Fig. 7

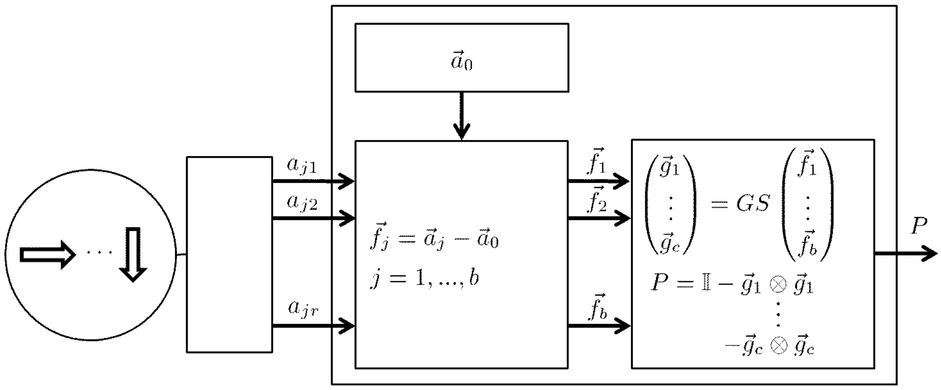


Fig. 8

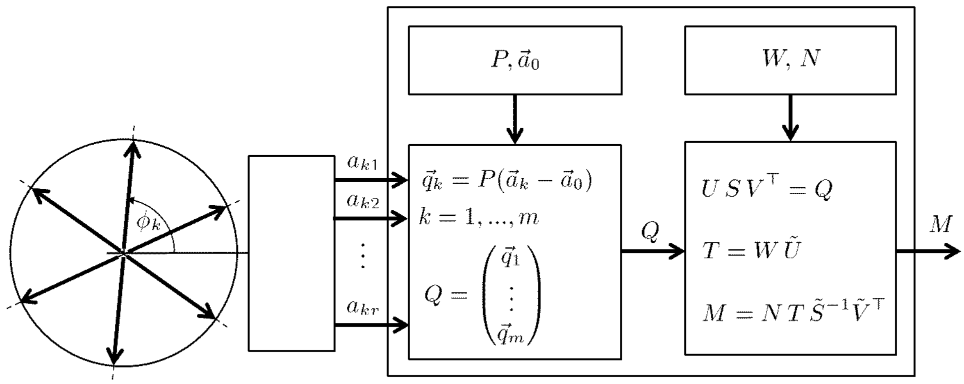


Fig. 9

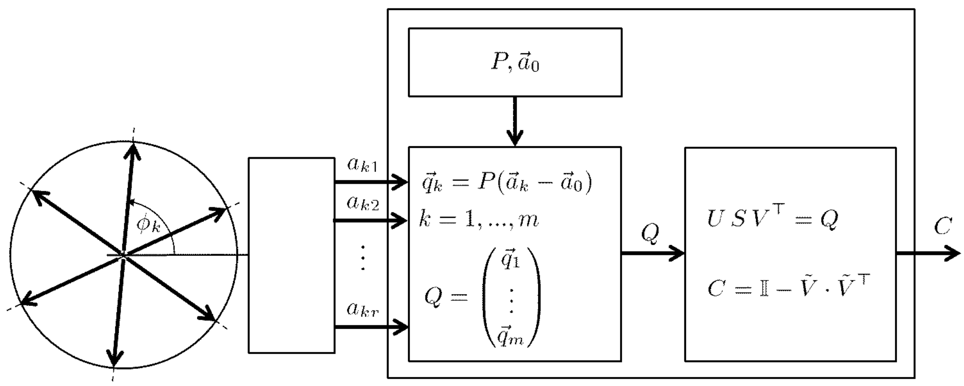

Fig. 10

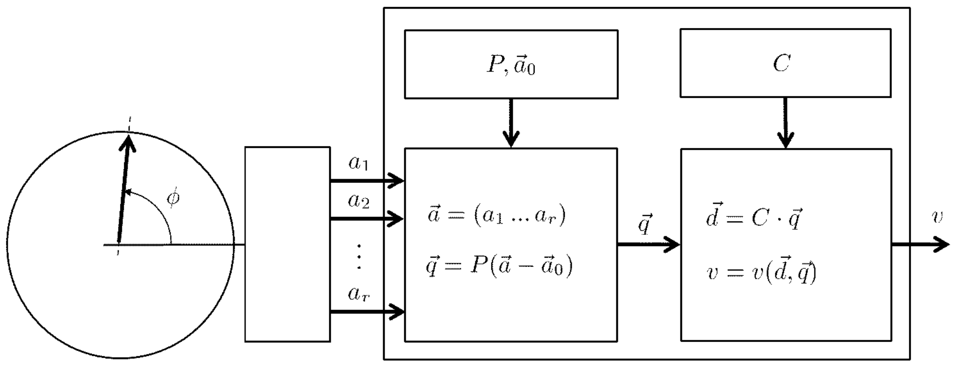
$P, \vec{a}_0$
$C$
$\phi$
$a_1$
$a_2$
$a_r$
$\vec{a} = (a_1 \ldots a_r)$
$\vec{q} = P(\vec{a} - \vec{a}_0)$
$\vec{q}$
$\vec{d} = C \cdot \vec{q}$
$v = v(\vec{d}, \vec{q})$
$v$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005124286 A
- US 2015048242 A
- WO 2005124286 A1